# EUROPEAN PATENT SPECIFICATION

(11) **EP 1 298 537 B1**
(45) Date of publication and mention of the grant of the patent: **13.08.2008**
(21) Application number: 01123095.0
(22) Date of filing: 27.09.2001
(51) Int. Cl.: G06F 17/30

(54) **Method and computer system for adjusting caches**
Verfahren und Vorrichtung zur Aktualisierung des Cachespeichers
Procédé et système d'ajustement des antémémoires

(43) Date of publication of application: 02.04.2003
(73) Proprietor: SAP AG, 69190 Walldorf (DE)
(72) Inventor: Brendle, Rainer, Dr., 69151 Neckargemünd (DE)
(74) Representative: Rocke, Carsten

(56) References cited:
- WO-A-99/64966
- US-A- 6 098 078
- PETERSEN K ET AL: "FLEXIBLE UPDATE PROPAGATION FOR WEAKLY CONSISTENT REPLICATION" OPERATING SYSTEMS REVIEW (SIGOPS), ACM HEADQUARTER. NEW YORK, US, vol. 31, no. 5, 1 December 1997 (1997-12-01), pages 288-301, XP000771039
- ROUSSKOV A ET AL: "Cache digests" COMPUTER NETWORKS AND ISDN SYSTEMS, NORTH HOLLAND PUBLISHING. AMSTERDAM, NL, vol. 30, no. 22-23, 25 November 1998 (1998-11-25), pages 2155-2168, XP004152168 ISSN: 0169-7552
- MAKPANGOU M ET AL: "REPLICATED DIRECTORY SERVICE FOR WEAKLY CONSISTENT DISTRIBUTED CACHES" PROCEEDINGS OF THE 19TH INTERNATIONAL CONFERENCE ON DISTRIBUTED COMPUTING SYSTEMS. ICDCS '99. AUSTIN, TX, MAY 31 - JUNE 4, 1999, INTERNATIONAL CONFERENCE ON DISTRIBUTED COMPUTING SYSTEMS, LOS ALAMITOS, CA: IEEE COMPUTER SOC, US, 31 May 1999 (1999-05-31), pages 92-100, XP000883606 ISBN: 0-7803-5706-X
- DUANE WESSELS: "Web Caching" June 2001 (2001-06), O'REILLY ISBN: 1-56592-536-X * sections 8.1, 8.4 and 8.5 * * appendix E *
- TEWARI R. ET AL: 'Design considerations for distributed caching on the Internet' DISTRIBUTED COMPUTING SYSTEMS, 1999. PROCEEDINGS. 19TH IEEE INTERNATIONAL CONFERENCE ON AUSTIN, TX, USA 31 May 1999, LOS ALAMITOS, CA, USA, pages 273 - 284, XP002933076

## Description

### Field of the Invention

The present invention generally relates to electronic data processing, and more particularly, relates to method, computer program product and system for adjusting caches in a network.

### Background of the Invention

Client-server technology was introduced in the early 90s of the 20^{th} century to achieve a high degree of scalability in corporate computer networks. Scalability of a computer system means that system performance can be improved by adding more hardware in a linear way. System performance can be measured by the time the system needs to respond to an user interaction (response time of the system).

An example for a client-server system is the SAP R/3™ system, where one database server stores all application data. The database server can be accessed substantially simultaneously by a plurality of application users using a plurality of client computers. Each client computer accesses at least an application server. A plurality of application servers accesses the database server. Application servers handle the application logic, thus taking away load from the database server. By increasing the number of application server computers, almost a deliberate number of users can work on the same database system, because the load is balanced between the database system and all application server computers. The application servers store copies of original database objects in a so-called buffer area (cache) of their memories to reduce the number of accesses to the original database objects.

With the extension of internal corporate networks through internet applications the number of users in a corporate network becomes much larger than the number of users in an internal client-server system. Further, internet applications do not have exactly one source of objects, such as application data, as it is the case in client-server systems, where all objects are stored on one database server.

K. Petersen et al. "Flexible update propagation for weakly consistent replication", SIGOPS, Vol. 31, No. 5, December 1997 discloses the so-called Bayou's anti-entropy protocol for update propagation for weakly consistent storage replicas. The protocol is based on a pair wise communication between two Bayou servers in order to mutually propagate write operations based on a set of ordering and closure constraints on the propagation of writes.

A. Rousskov et al. "Cache Digests", Computer Networks and ISDN Systems, Vol. 30, No. 22-23, November 1998 refers to cache digests for cooperative Web caching. Cache digests allow proxies to make information abut their cache contents available to peers in a compact form.

R.Tewari, et al. "Design considerations for distributed caching on the Internet" , IEEE, Distributed Computing Systems, May 1999 refers to an integrated architecture for cache systems for shared, distributed caches for scaling purposes. In order to improve response times from distributed caches, hit times and miss times are additionally considered.

### Summary of the Invention

Hence, the present invention provides computer-implemented method, computer program product and computer system to solve the technical problem of fast access to objects that are distributed in a computer network, such as the internet, wherein the access can occur substantially simultaneously from multiple computers in the network by a deliberate number of users.

The idea of the present invention is to overcome this problem by removing a bottleneck that exists in prior art systems, because data, which have to be shared between several computers, only can reside on one single central location (e.g. a specific database server computer) in the network.

The present invention takes advantage of the fact that most objects are not needed in an absolutely temporal precise manner but still have to be consistent within a certain time interval. For example, objects having a static character, such as master data of an application system, can be "buffered" in a cache of a network computer because they are rarely changed. "Buffer" stands for storing a copy of the object intermediately in a cache memory portion of the network computer. Thus, the retrieval of an object directly from a corresponding database, which is slower than the retrieval from a cache memory, can be avoided as long as no modification is applied to the object and the buffered copy of the object in the cache is identical with the original object in the database.

A further technical problem is consistency of multiple copies of the same object in multiple caches to prevent a computer user from working with an old version of the object.

According to the present invention, in a large computer network, such as the Internet, substantially simultaneous access to an object by a large number of users is achieved by storing buffered copies of the object in the caches of a plurality of network computers. Each buffered copy of the object should be identical with the original object that is stored somewhere in a database of a network computer. The inventive method, computer system and computer program products adjust the caches of multiple network computers at a predefined synchronization frequency by deleting obsolete copies of objects from the caches. The synchronization frequency is defined as the reciprocal value of one synchronization interval. The synchronization interval is the time between two consecutive cache adjustments of two computers. It is not necessary that the synchronization frequency is constant over time. The present invention guarantees validity of buffered object copies within two synchronization intervals. Thereby, it is not important for the invention that both synchronization intervals have the same length.

Further, according to the present invention, a consistent copy of the object is provided at a network computer where the object is needed, rather than retrieving the original object each time when a user tries to access.

Before explaining how the features of the present invention solve the technical problems, the following terms and abbreviations that are used throughout the description are defined:
Object: a data structure with a specific meaning within a specific context (e.g. tables, files, application objects, web page content, query results). Preferably, an object is stored on an origin computer. Various actions (A), such as create (C), modify (M) or delete (D), can be applied to the object on the origin computer. To accelerate access to the object, various copies of the object can be stored on multiple computers. Preferably, these copies are stored in a cache memory. In the following description copies of an object are also referred to as "object".
Origin computer (O-computer, OC): computer, where an original object is stored (e.g. web application, table, etc.). Preferably, an O-computer is a database computer.
Cache computer (C-computer, CC): computer that stores objects of at least one origin computer in a cache memory and adjusts information about objects in compliance with other cache computers in a network through an appropriate adjustment mechanism.
Cache: Cache memory on a C-computer to intermediately store copies of objects of a corresponding O-computer. A C-computer can have multiple caches.
Journal: a data structure to store journal entries that track the change history of objects on O-computers over time for a maximum tracking period. A journal entry corresponds to a modification of an object on an O-computer. Preferably, the journal exists on a C-computer. If an 0-computer is assigned to a C-computer, the journal of the C-computer tracks each journal entry that originates in the O-computer. Preferably, the journal further comprises journal entries of further O-computers. A first C-computer adjusts its journal to the journal of a second C-computer. Thereby, all journal entries referring to a specific 0-computer stay in a temporal correct manner in the adjusted journal. The adjusted journal is used later to adjust the cache of the first C-computer.
Universal sequence number (USN): numbers that are generated as strictly increasing (or strictly decreasing) numbers over time. Preferably, USNs are of type integer. Preferably, with each modification of an object on an 0-computer assigned to a C-computer, a corresponding journal entry is created with a new USN on the C-computer. Preferably, the USN together with the ID of the O-computer forms the key of the journal entry on the C-computer. Preferably, a journal entry with a higher absolute USN value for a specific O-computer was generated later than a journal entry with a lower absolute USN value for this O-computer. A journal entry having the highest absolute USN value for an 0-computer is referred to as "the latest journal entry referring to the O-computer".
Synchronization: as used hereinafter, synchronization (or the verb synchronizing) is used to describe making at least a part of a first data structure on a first C-computer equal to at least a corresponding part of a second data structure on a second C-computer.
Synchronization mark (S-mark): a data structure to store in a first C-computer a representation of the latest journal entry of a second C-computer at the time of the last synchronization between the two C-computers; the latest journal entry referring to a corresponding O-computer.
Synchronization vector (S-vector): a vector to store in a first C-computer the S-marks of all C-computers in the network with respect to the first C-computer.
Synchronization trigger (S-trigger): a signal to initiate synchronization of at least two C-computers. For example, the S-trigger can be launched by a time scheduled event or a request from a first C-computer to a second C-computer.
Synchronization topology: defines the order of synchronization in case of multiple C-computers in a network. Preferably, a ring-topology is used, but any other topology covering the complete network can be used as well.
Content digest (CD): a sequence of a plurality of bit patterns on a C-computer, wherein each bit pattern is a representation of an object that is stored in the cache of the C-computer.
Digest matrix (D-matrix): a matrix that is stored on a C-computer and that comprises for each C-computer in the network the ID of the C-computer and the content digest of the C-computer. Preferably, the D-matrix of a C-computer is updated with every S-trigger.
Transmit, send: the verbs transmit and send stand for making data available from a first to a second computer. Thereby, the original data typically remain on the first computer and a copy of the data is received by the second computer.

The present invention solves the aforementioned problem of consistency of multiple copies of the same object in multiple caches through the features of a computer-implemented cache adjustment mechanism that is described as computer-implemented method as claimed in claim 1, computer system as claimed in claim 11 and corresponding computer program products according to claims 4 and 5.

This cache adjustment mechanism has the advantage that two C-computers have journals that are adjusted after the inventive method has been applied to the C-computers. In case of more than two C-computers in the inventive computer network it may take up to two synchronization intervals until all corresponding journals have received a specific journal entry. Typically, this is achieved by a predefined synchronization topology for the inventive network and a synchronization trigger that is launched at predefined synchronization intervals. Therefore, each C-computer in the network knows the change history of all objects in the network (journals) by the time of the last synchronization (S-marks) with the corresponding C-computer. Preferably, a predefined maximum time interval defines how far into the past journal entries are considered in the synchronization mechanism. For example, if a C-computer was offline for more than the maximum time interval, this C-computer, when going online again, re-synchronizes with the journal entries of the other C-computers within the maximum time interval. During a time interval where one or more C-computers are offline, the predefined synchronization topology can be disturbed. For example, a C-computer that wants to synchronize with an offline C-computer can find an online C-computer via a random generator and continue with the synchronization.

Features of the inventive method, as expressed in claim 1 in combination with the dependent claims 2 and 3, solve the technical problem of substantially simultaneous access of multiple users to objects that are distributed in the computer network. In case that an object is not available in the cache of the C-computer that receives a corresponding request, the object is distributed to this cache. Optionally in the updating step the first computer further updates the first digest matrix according to the first cache.

The first method optionally comprises the further step i): Synchronizing the first digest matrix with the second digest matrix. Preferably, but not limiting, step i) is performed after the updating step.

The optional features and steps of the first method can also be performed in a different order, if appropriate.

The advantages of the features of the inventive method are:
- A localization of the second C-computer as supplier of a requested object by comparing a representation of the object with the first digest matrix. The localization is faster compared to a prior art mechanism, where each C-computer is queried for the object.
- A distribution of the requested object from the second cache, where it is stored, to the first cache, where it is requested. Having multiple cache copies of the requested object accelerates future access to the object and reduces load of the inventive network by reducing network traffic.

Multiple buffered copies of the object become available at multiple locations (C-computers), thus eliminating the bottleneck of a single content source (e.g. a single database server). The retrieval of the object from a cache memory is much faster than the retrieval directly from a database.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of the inventive computer system;
- FIG. 2: illustrates details of two different states of a preferred embodiment of the computer system;
- FIG. 3: illustrates further details of two further states of the preferred embodiment of the computer system;
- FIG. 4: illustrates a cache adjustment method according to the present invention;
- FIG. 5: illustrates details of a mechanism to scan a content digest for a specific object representation;
- FIG. 6: illustrates a preferred topology for the inventive computer system; and
- FIG. 7: illustrates preferred embodiments of two computer program products for cache adjustment according to the present invention.

### Detailed Description of the Invention

Wherever possible, the same reference numbers will be used throughout the drawings to refer to the same or like parts. For convenience of explanation a list of references is provided prior to the claims.

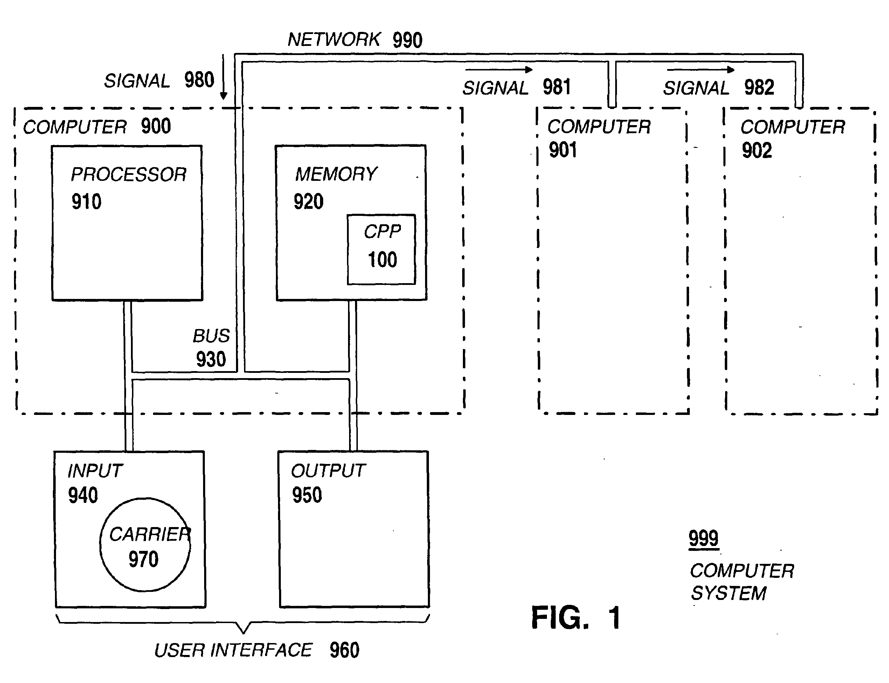

FIG. 1 illustrates a simplified block diagram of the inventive computer system 999 having a plurality of computers 903, 904, 902 (or 90q, with q=0...Q-1, Q any number).

Computers 903-902 are coupled via inter-computer network 990. Computer 903 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 903, computer 904/902 is sometimes referred to as "remote computer", computer 904/902 is, for example, a server, a router, a peer device or other common network node, and typically comprises many or all of the elements described relative to computer 903. Hence, elements 100 and 910-980 in computer 903 collectively illustrate also corresponding elements 10q and 91q-98q (shown for q=0) in computers 90q.

Computer 903 , for example, is a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 903, memory function can also be implemented in network 990, in computers 904/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 903 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 903 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 903 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 903. For communicating CPP 100 to computer 903, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 903.

Having described CPP 100, program carrier 970, and program signal 980 in connection with computer 903 is convenient. Optionally, program carrier 971/972 (not shown) and program signal 981/982 embody computer program product (CPP) 101/102 to be executed by processor 911/912 (not shown) in computers 904/902, respectively.

Input device 940 symbolizes a device that provides data and instructions for processing by computer 903. For example, device 940 is a keyboard, a pointing device (e.g., mouse, trackball, cursor direction keys), microphone, joystick, game pad, CCanner. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 903 are conveniently referred to as "bus 930", connections between computers 903-902 are referred to as "network 990". Optionally, network 990 comprises gateways being computers that specialize in data transmission and protocol conversion.

Devices 940 and 950 are coupled to computer 903 by bus 930 (as illustrated) or by network 990 (optional). While the signals inside computer 903 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 903 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

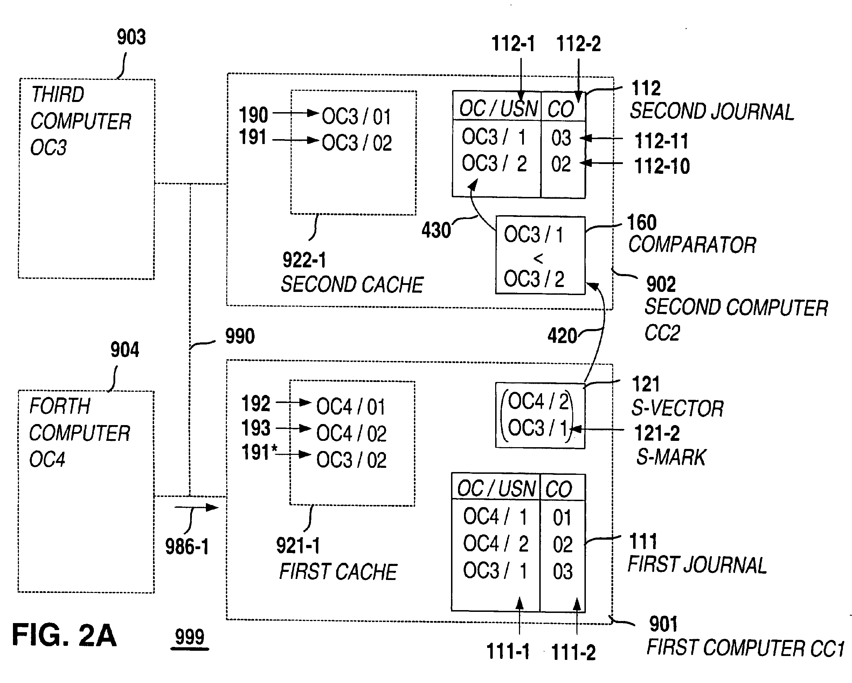

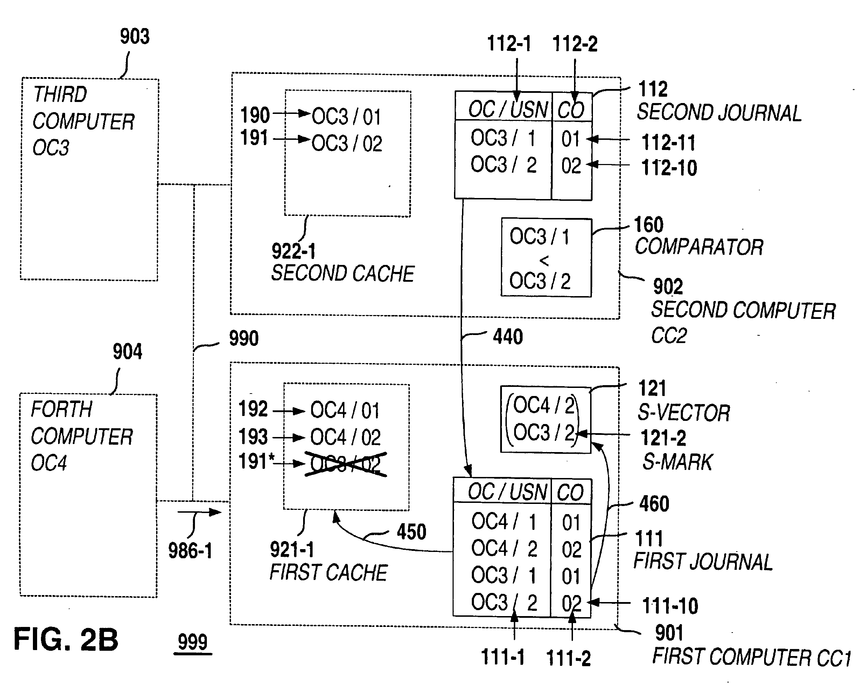

FIG. 2 illustrates details of two different states (FIG. 2A, FIG. 2B) of a preferred embodiment of computer system 999. Hardware components of computer system 999 are illustrated by dotted lines or frames, whereas software related components are illustrated by solid lines or frames. For convenience of understanding, IDs (e.g. OC3 for third computer 903) and values (e.g. OC3/2 for S-mark 121-2) that are used in the example are sometimes written in parenthesis following the reference number.

FIG. 2A shows four computers 901, 902, 903, 904 of computer system 999 that are connected via network 990. First computer 901 (CC1) and second computer 902 (CC2) are C-computers. Third computer 903 (OC3) and forth computer 904 (OC4) are O-computers.

First computer 901 (CC1) has first cache 921-1. In the example, first cache 921-1 stores objects 192, 193 (OC4/01, OC4/02) originating in forth computer 904 (OC4) and stores object 191* (OC3/02) originating in third computer 903 (OC3). Second computer 902 (CC2) has second cache 922-1. In the example, second cache 922-1 stores objects 190, 191 (OC3/01, OC3/02) originating in third computer 903 (OC3).

First computer 901 stores first journal 111. First journal 111 comprises all journal entries relating to object modifications on forth computer 904. In the example, first journal 111 further stores a journal entry (OC3/1) that corresponds to a modification of an object (03) on third computer 903 (OC3). Second computer 902 stores second journal 112. Second journal 112 comprises all journal entries 112-10, 112-11 relating to third computer 903. Optionally, forth computer 904 (OC4) stores an own journal (not shown) to track the change history of all objects of forth computer 904 and third computer 903 (OC3) stores its own journal (not shown) to track the change history of all objects of third computer 903. It is not important for the present invention, how journal entries originating in an origin computer are transmitted to a corresponding journal of a cache computer, where the origin computer is assigned to. Preferably, the origin computer intermediately stores the journal entries and the cache computer loads new journal entries of the assigned origin computer at predefined time intervals. Preferably but not limiting, when a new journal entry for a specific object is generated, the new journal entry replaces an old journal entry for the specific object. Alternatively, new journal entries are appended to the corresponding journal.

For convenience of explanation, the data structure of a journal is explained by using second journal 112 as an example. In the example, second journal 112 has two journal entries 112-10, 112-11 that both refer to third computer 903 (OC3). Each journal entry has a key that comprises an ID (OC) of the corresponding O-computer (e.g. OC3) and an USN (e.g. 1). The key (e.g. OC3/1) is stored in column 112-1 of journal 112. Further, each journal entry comprises an ID (e.g. 01) of the modified object (e.g. 01, 02) in column 112-2. Journal 111 comprises columns 111-1 and 111-2 that are functionally equivalent to columns 112-1 and 112-2 respectively.

Preferably, first computer 901 (CC1) stores S-vector 121. In the example, S-vector 121 comprises S-mark 121-2. S-mark 121-2 stores a representation (OC3/1) of a previous latest second journal entry 112-11 at the time of the last synchronization between the two C-computers 901, 902. In the example, the value OC3/1 of S-mark 121-2 indicates that the latest previous second journal entry has the key OC3/1. First computer 901 receives S-trigger 986-1, which causes first computer 901 to synchronize with second computer 902. First computer 901 sends 420 S-vector 121 to second computer 902. Comparator 160 of second computer 902 compares 430 S-mark 121-2 (OC3/1) with a comparable portion 112-1 of second journal 112. If second journal 112 has a current latest journal entry 112-10 referring to third computer 903 (OC3) that is newer than previous latest second journal entry 112-11, second computer 902 (CC2) identifies each second journal entry 112-10 that is newer than previous latest second journal entry 112-11 and that refers to third computer 903. In the example, the key of current latest journal entry 112-10 (OC3/2) originating from corresponding third computer 903 (OC3) has an USN portion that is higher than the USN portion of the key of previous latest journal entry 112-11 (2 < 1). Therefore, in the example, journal entry 112-10 is identified.

In case of S-vector 121 having multiple S-marks, second computer performs comparison 430 with the identification of new journal entries referring to further 0-computers for each S-mark.

FIG. 2B illustrates computer system 999 after the cache adjustment of first cache 921-1.

In the example, second computer 902 transmits 440 identified second journal entry 112-10 (OC3/2) to first journal 111, where it is added as first journal entry 111-10.

First journal entry 111-10 indicates that the original object OC3/02 (not shown, stored on third computer 903) that corresponds to object 191* (OC3/02) was modified since object 191* was loaded into first cache 921-1. Therefore, object 191* most likely is no longer consistent with the corresponding original object on third computer 903. As a consequence, first computer 901 (CC1) adjusts 450 first cache 921-1 by deleting object 191* (crossed out) in first cache 921-1.

Preferably, S-mark 121-2 of S-vector 121 is updated 460, accordingly, by replacing the old value (OC3/1) with a representation (e.g. the key) of the corresponding latest first journal entry 111-10 (OC3/2), which is a copy of current latest second journal entry 110-10.

The advantage of this cache adjustment mechanism is that the obsolete object (e.g. 191*) does not exist anymore in first cache 921-1. Now, first computer 901 knows the change history of all objects on third computer 903. In case of S-vector 121 comprising multiple S-marks, first computer 901 also knows the change history of objects on the corresponding O-computers. Further, S-vector 121 stores at least S-mark 121-2 on first computer 901. S-mark 121-2 represents latest second journal entry 112-10 and is comparable with a bookmark. When first computer 901 receives a further S-trigger and comparator 160 identifies a need to transmit additional journal entries from second journal 112 to first journal 111, the bookmark is used to identify the additional journal entries. The additional journal entries have an USN portion higher than the USN portion of the bookmark.

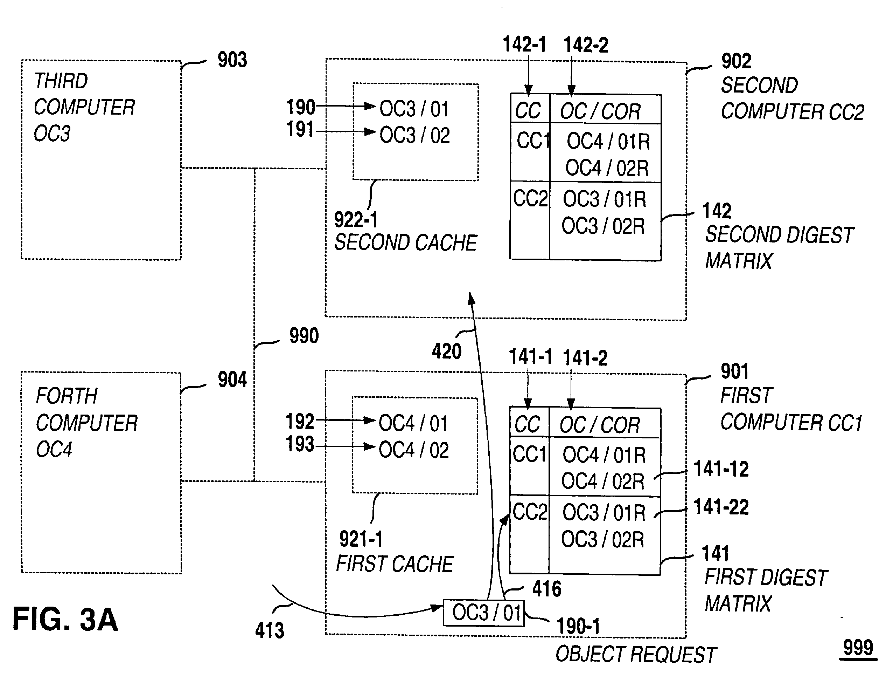

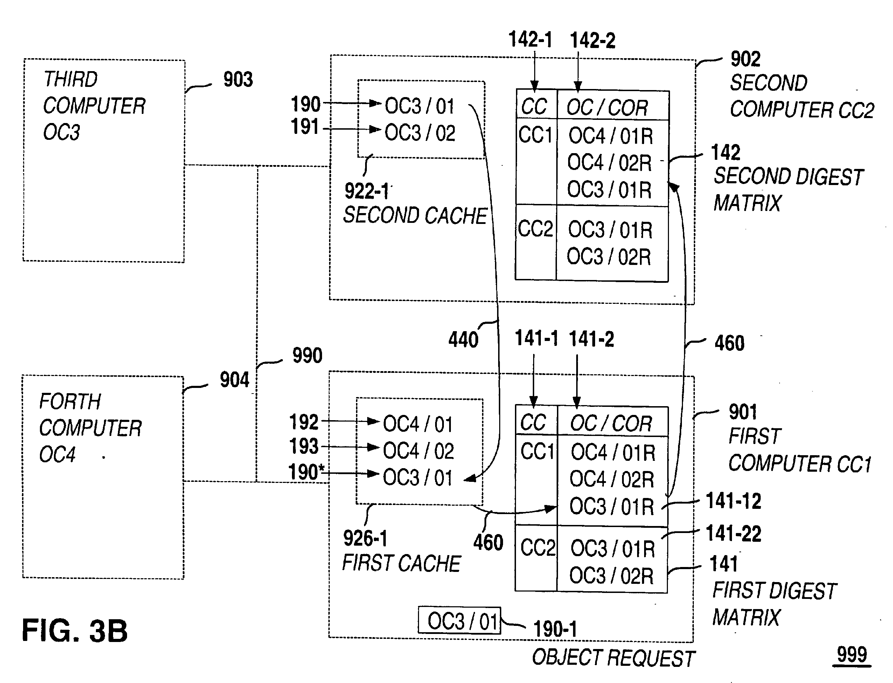

FIG. 3 illustrates details of two further states (FIG. 3A, FIG. 3B) of the preferred embodiment of computer system 999. As in FIG. 2, hardware components of computer system 999 are illustrated by dotted lines or frames, whereas software related components are illustrated by solid lines or frames.

FIG. 3A shows the four computers 901, 902, 903, 904 of computer system 999 as described under FIG. 2.

In the example, first cache 921-1 stores objects 192 (OC4/01) and 193 (OC4/02). Objects 192, 193 were loaded from forth computer 904 (OC4). Second cache 922-1 stores objects 190 (OC3/01) and 191 (OC3/02). Objects 190, 191 were loaded from third computer 903 (OC3).

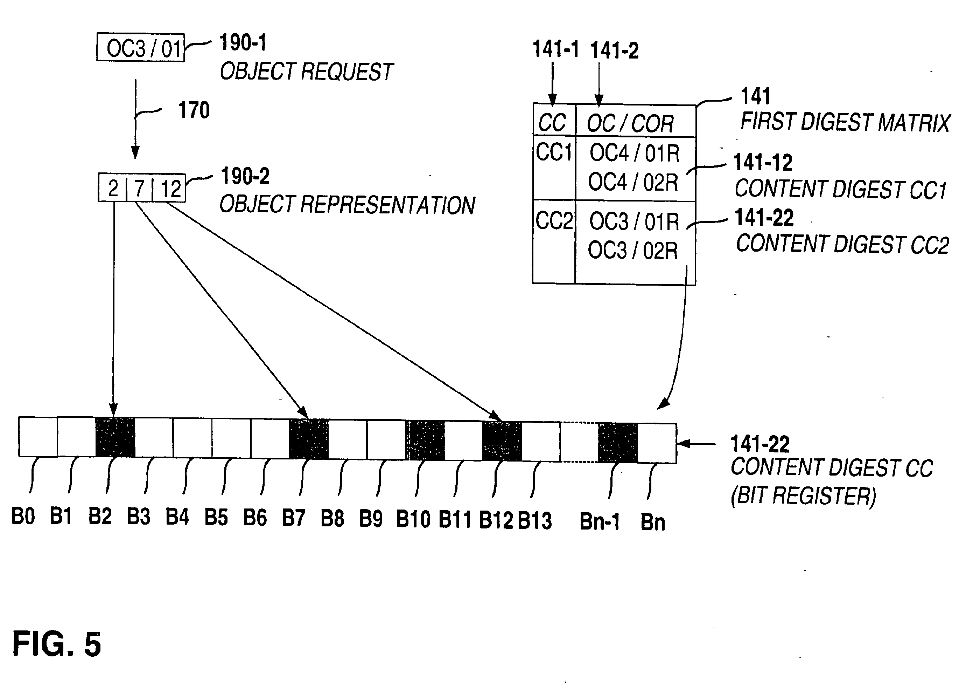

Further, first computer 901 has first digest matrix 141 and second computer 902 has second digest matrix 142. For convenience of explanation, the data structure of a digest matrix is explained by using the example of first digest matrix 141. First digest matrix 141 comprises column 141-1 (CC) and column 141-2 (OC/COR). Column 141-1 stores IDS of C-computers (e.g. CC1, CC2) of computer system 999. Column 141-2 stores a content digest (e.g. content digest CC1 141-12) of the corresponding C-computer in column 141-1. Each content digest comprises representations of objects that are stored in the cache of the corresponding C-computer. Preferably, each object representation is implemented as a bit pattern. For example, the object representations OC3/01R and OC3/02R represent the objects 190 (OC3/01) and 191 (OC3/02) of second computer 902 (CC2), respectively. Details about object representations are explained under FIG. 5. Second digest matrix 142 comprises columns 142-1 and 142-2 that are functionally equivalent with columns 141-1 and 141-2, respectively.

First computer 901 receives 413 request 190-1 for object 190. For example, request 190-1 has the format of an object key (e.g. OC3/01). First computer 901 uses first digest matrix 141 to identify 416 second computer 902 (CC2) as a supplier of requested object 190, because content digest 141-22 of C-computer 902 (CC2) comprises the object representation OC3/01R of the requested object 190 (OC3/01).

First computer 901 (CC1) sends 420 object request 190-1 to second computer 902 (CC2), to retrieve corresponding object 190 from second cache 922-1.

FIG. 3B illustrates computer system 999 after adjusting first cache 926-1 according to the result of the distribution of object 190.

Second computer 902 (CC2) transmits 440 object 190 from second cache 922-1 to first cache 921-1 resulting in object 190*.

First computer 901 (CC1) updates 450 its content digest 141-22 in first digest matrix 141 by adding an object representation (OC3/01R) for object 190*.

Second computer 902 (CC1) synchronizes 460 second digest matrix 142 with updated first digest matrix 141.

The advantage of this optional cache adjustment mechanism is the availability of the same object (OC3/01) on multiple computers in computer system 999 (e.g. object 190 on second computer 902 and object 190* on first computer 901). This removes the bottleneck of a single source of data. Further, the information about the multiple storage locations of an object is spread by synchronizing the digest matrices of C-computers in computer system 999.

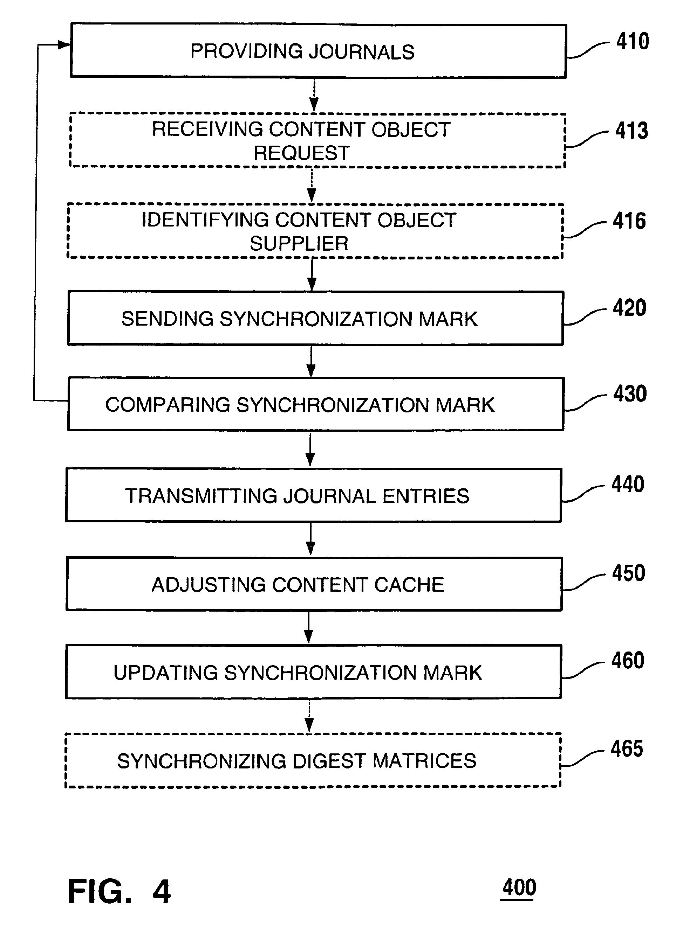

FIG. 4 illustrates cache adjustment method 400 according to the present invention.

Method 400 comprises the steps providing journals 410, sending synchronization vector 420, comparing synchronization mark 430, transmitting journal entries 440, adjusting cache 450 and updating synchronization vector 460. Method 400 comprises the further steps: receiving object key 413, identifying object supplier 416 and optionally synchronizing digest matrices 465. The steps 413, 416 and 465 are illustrated by dashed frames. It is not necessary for the present invention that the steps are performed in the same order as described. The steps are now explained in detail.

In the providing journals step 410, computer system 999 (cf. FIG. 2A) has first computer 901 (CC1) (cf. FIG. 2A) and second computer 902 (CC2) (cf. FIG. 2A). In the example, first and second computers 901, 902 are C-computers. First computer 901 has first cache 921-1 (cf. FIG. 2A) and provides first journal 111 (cf. FIG. 2A). Second computer 902 has second cache 922-1 (cf. FIG. 2A) and provides second journal 112 (cf. FIG. 2A). Preferably, first and second journals 111, 112 are tables that are stored in corresponding memories (e.g. 921, 922 cf. FIG. 1) of first and second computers 901, 902, respectively. In the example, journal entry 112-10 (cf. FIG. 2A) of second journal 112 indicates a modification of object 02 (column 112-2 of journal entry 112-10) on third computer 903 (cf. FIG. 2A). Preferably, third computer 903 is an O-computer. Journal entry 112-10 has a unique key 112-1 that comprises the ID of third computer 903 (OC3) and an USN (2). Preferably, third computer 903 creates a journal entry with a new USN for an object (e.g. 02) in second journal 112, each time when the object is changed (e.g. modified, deleted). The USNs referring to an O-computer are generated as strictly increasing or strictly decreasing numbers over time.

In the sending synchronization mark step 420, first computer 901, preferably, sends S-vector 121 to second computer 902 via network 990 (cf. FIG. 2A) caused by S-trigger 986-1. S-vector 121 comprises S-mark 121-2. S-mark 121-2 stores a representation (e.g. the key) of the previous latest second journal entry (OC3/1) with respect to third computer 903 (OC3) at the time of the last synchronization between first and second computers 901, 902. In case that no synchronization occurred so far, an initial value (e.g. OC3/0) is assigned to S-mark 121-2.

In the comparing synchronization mark step 430, comparator 160 of second computer 902 compares 430 S-mark 121-2 (OC3/1) with a comparable portion 112-1 of second journal 112. If second journal 112 has a current latest journal entry 112-10 referring to third computer 903 (OC3) that is newer than previous latest second journal entry 112-11, second computer 902 (CC2) identifies each second journal entry 112-10 that is newer than previous latest second journal entry 112-11 and that refers to third computer 903. In case no such current latest journal entry 112-10 exists, method 400 waits for the next S-trigger to restart (arrow to step 410). In the example, the key of current latest journal entry 112-10 (OC3/2) originating from corresponding third computer 903 (OC3) has an USN portion that is higher than the USN portion of the key of previous latest journal entry 112-11 (2 < 1). Therefore, in the example, journal entry 112-10 is identified. In the example, this indicates that object 190 (OC3/02) of third computer 903 was modified since the last synchronization between first and second computers 901, 902. The result of the comparing 430 step is a list of all journal entries (e.g. 112-10) of second journal 112 that refer to third computer 903 (OC3) and were created since the last synchronization between first and second computer 901, 902. Preferably, comparator 160 considers all journal entries that were generated by third computer 903 within a predefined time interval prior to S-trigger 986-1. Typically, the time interval is defined in a way that journal entries that were generated outside the time interval are outdated. Preferably, the comparing synchronization step 430 is repeated for all S-marks stored in S-vector 121.

In the transmitting journal entries step 440, second computer 902 transmits the list of journal entries resulting from the comparison step 430 to first journal 111 (via network 990). In the example, journal entry 112-10 (OC3/2) of second journal 112 is transmitted to first journal 111, where it is added as journal entry 111-10 (cf. FIG.2B). First journal 111 has now synchronized with second journal 112. That is, first computer 901 has the same knowledge as second computer 902 about the status of objects of at least third computer 903.

In the adjusting cache step 450, first computer 901 (CC1) uses the information of new journal entries (e.g. 111-10) in first journal 111 to adjust first cache 921-1. In the example, journal entry 111-10 indicates that the original object OC3/02 (on third computer 903; not shown) that corresponds to object 191* (OC3/02) (cf. FIG. 2A) was modified since object 191* was loaded into first cache 921-1. Therefore, object 191* most likely is no longer consistent with the corresponding original object on third computer 903. As a consequence, first computer 901 (CC1) adjusts 450 first cache 921-1 by deleting (cf. FIG. 2B, crossed out) object 191* from first cache 921-1.

In the updating step 460, first computer 901 updates on first computer 901 at least S-mark 121-2 of S-vector 121 with the key of current latest journal entry 111-10 (OC3/2) and referring to third computer 903 (OC3). Updated S-mark 121-2 serves as a bookmark for second journal 112 when the next S-trigger occurs.

The steps 410-450 of method 400 describe a basic cache adjustment mechanism for multiple C-computers in a network to synchronize journals that trace information about the change status of objects on O-computers and to adjust the content of corresponding caches, accordingly. This mechanism is complemented by additional characteristics of steps 410-460 and further steps 413, 416 and 465 to provide a more comprehensive cache adjustment mechanism.

The more comprehensive mechanism distributes copies of an object to multiple C-computers in the network, thus providing multiple sources for the object. The additional characteristics of steps 410-460 and the steps 413, 416 and 465 of method 400 are now described in detail.

In the providing journals step 410, first computer 901 (CC1) further provides first digest matrix 141 (cf. FIG. 3A) and second computer 902 (CC2) provides second digest matrix 142 (cf. FIG. 3A). For example, first digest matrix 141 of first computer 901 (CC1) stores for each C-computer 141-1 (CC2, CC1) in network 990 a content digest 141-12, 141-22 (cf. FIG. 3A) of the corresponding C-computer (CC1, CC2).

In the receiving object request step 413, first computer 901 receives request 190-1 for object 190, preferably in the form of an object key (e.g. OC3/01; cf. FIG. 3A). In the example, requested object 190 is not available in first cache 921-1 of first computer 901 (CC1).

In the identifying object supplier step 416, first computer 901 identifies second computer 902 as a supplier of object 190. To achieve this, preferably, first computer 901 transforms object key 190-1 (OC3/01) into representation 190-2 (cf. FIG. 5) of object 190. First computer 901 (CC1) compares object representation 190-2 with content digests 141-12, 141-22 in column 141-2 of first digest matrix 141. In the example, content digest CC2 141-22 of second computer 902 (CC2) comprises a representation of object 190 (OC3/01R). This indicates that object 190 is stored in second cache 922-1 (cf. FIG. 3A) of second computer 902 (CC2). Therefore, second computer 902 (CC2) is identified as a possible supplier of object 190. There can be more than one supplier for the same object. Preferably, first computer 901 identifies the supplier that is found first in first digest matrix 141. The details of transforming and comparing object representations are described under FIG. 5.

In the sending synchronization mark step 420, first computer 901 (CC1) further sends object request 190-1 to the identified second computer 902 (CC2).

In the transmitting journal entries step 440, second computer 902 (CC2) further transmits object 190 to first cache 921-1. First cache 926-1 now comprises object 190* (OC3/01), which is a consistent copy of object 190.

Optionally, in the updating synchronization mark step 460, first computer 901 (CC1) further updates first digest matrix 141 by adding a representation (OC3/01R) of object 190* to content digest CC1 141-12. First digest matrix 141 now indicates that object OC3/01 is available in the caches of first computer 901 (CC1) and second computer 902 (CC2).

In the optional synchronizing digest matrices step 465, first computer 901 (CC1) sends first digest matrix 141 to second computer 902 (CC2). Second computer 902 (CC2) synchronizes second digest matrix 142 with first digest matrix 141. Preferably, second computer 902 (CC2) replaces the content of second digest matrix 142 with the content of first digest matrix 141 with the exception of content digest CC2 141-22. Each C-computer is responsible for the correctness of its own content digest and, preferably, does not update its own content digest when synchronizing its digest matrix with a further C-computer. After the synchronizing step 465, second computer 902 (CC2) also knows that object OC3/01 (190, 190*) is available in the caches of first computer 901 (CC1) and second computer 902 (CC2).

FIG. 5 illustrates details of a preferred embodiment of a mechanism to scan content digests (e.g. 141-22) for a representation of an object request (e.g. 190-1).

First digest matrix 141 comprises column 141-1 storing the IDs of C-computers (e.g. CC1, CC2) and column 141-2 storing for each C-computer in computer system 999 (cf. FIG. 2A) a corresponding content digest 141-12, 141-22. For convenience of explanation, content digest CC2 141-22 is used as an example to explain transforming and comparing object representations.

Content digest CC2 141-22 comprises representations (OC3/01R, OC3/02R) of objects 190, 191 (OC3/01, OC3/02 cf. FIG. 3A), which are stored in second cache 922-1. Content digest CC2 141-22 is also illustrated as a bit register B0-Bn. Each object representation in content digest 141-22 corresponds to a bit pattern in the bit register B0-Bn For example, object 190 corresponds to the bit pattern (B2, B7, B12). A bit pattern can comprise a deliberate number of bits. Bits that are turned on (e.g. bits having a logical "1") to form a bit pattern are grey shaded. Preferably, bloom filters that are known in the art (cf. US patents 6,134,551 / 6,073,160 / 5,946,692 / 5,813,000 / 5,701,464), can be used to generate the content digest bit pattern for each object that is stored in the cache of the corresponding C-computer.

In the example, transformer 170 of first computer 901 (CC1) transforms request 190-1 for object 190 (e.g. object key OC3/01) into object representation 190-2. Preferably, first computer 901 applies multiple transformations, such as hash-algorithms known in the art, to object request 190-1. The results of the transformations comply with the results of the bloom filters that are used to generate the content digest. For example, each hash algorithm results in a number that indicates a bit which is turned on in the bit register B0-Bn. In the example, three transformations are applied to object request 190-1 resulting in object representation 190-2. The result is tupel (2,7,12). Object representation 190-2 indicates that second computer 902 (CC2) is a possible supplier of object 190, because the corresponding bits B2, B7 and B12 of bit register B0-Bn are turned on.

An advantage of the described scan mechanism is the compression of object representations in content digests. The compression saves bandwidth when C-computers synchronize their digest matrices, because less data have to be exchanged between the C-computers when compared to an uncompressed content digest.

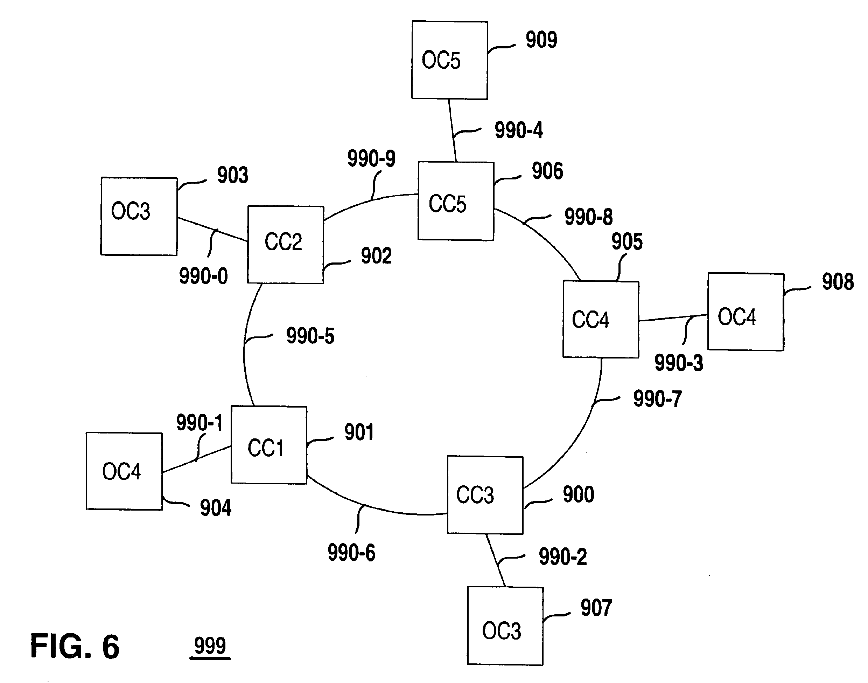

FIG. 6 illustrates a preferred synchronization topology for inventive computer system 999.

Preferably, C-computers 900, 901, 902, 905, 906 (CC1-SC5) are connected through network branches 990-5 to 990-9. In the example. a ring-topology is used to control the order of synchronization between the C-computers. Corresponding 0-computers 907, 904, 903, 908, 909 (OC1-OC5) are connected to C-computers CC1-CC5 through network branches 990-0 to 990-4. For example, when C-computer 901 (CC1) receives a S-trigger it can synchronize first with its left (CC2) or right neighbour (CC3) in computer system 999, depending on the direction that is defined for the synchronization topology. In the example, it is assumed that within one synchronization interval (SI) the following synchronization steps (SI-1 to SI-5) occur:
first (SI-1), CC1 synchronizes with CC2 (as described in method 400; cf. FIG. 4);
second (SI-2), CC3 synchronizes with CC1;
third (SI-3), CC4 synchronizes with CC3;
forth (SI-4), CC5 synchronizes with CC4; and
fifth (SI-5), CC2 synchronizes with CC5.

In case that an object of OC3 (e.g. OC3/02) was modified before SI-1, a copy of the corresponding journal entry (e.g. 112-10) of second journal 112 on CC2 is transmitted to further C-computers CC1 (in SI-1), CC3 (in SI-2), CC4 (in SI-3) and CC5 (in SI-4). Therefore, within on synchronisation interval (SI) each S-computer receives the information about the object modification on OC3.

In case that an object of a further origin computer (e.g. OC4) was modified before SI-1, the corresponding C-computer (e.g. CC4) stores a further journal entry that indicates the object modification. Within the synchronization interval (SI) the further journal entry is transmitted to CC5 (in SI-4) and to CC2 (in SI-5). The remaining C-computers CC1, CC3 and CC4 receive the further journal entry during the following synchronization interval (SI + 1).

In case that none of the direct neighbours is available for synchronization, CC1 selects any other C-computer within network 999. From there, the synchronization is continued. The network topology is not important for the present invention, as long as all C-computers in computer system 999 are reached.

Computer system 999 according to the present invention provides improvement in the access time to an object when the system comprises at least two C-computers. This improvement becomes more significant with every additional C-computer in computer system 999 when compared to a prior art system with a single source for the object.

After having described the present invention as computer-implemented method, it will now be described as computer program product and computer readable medium.

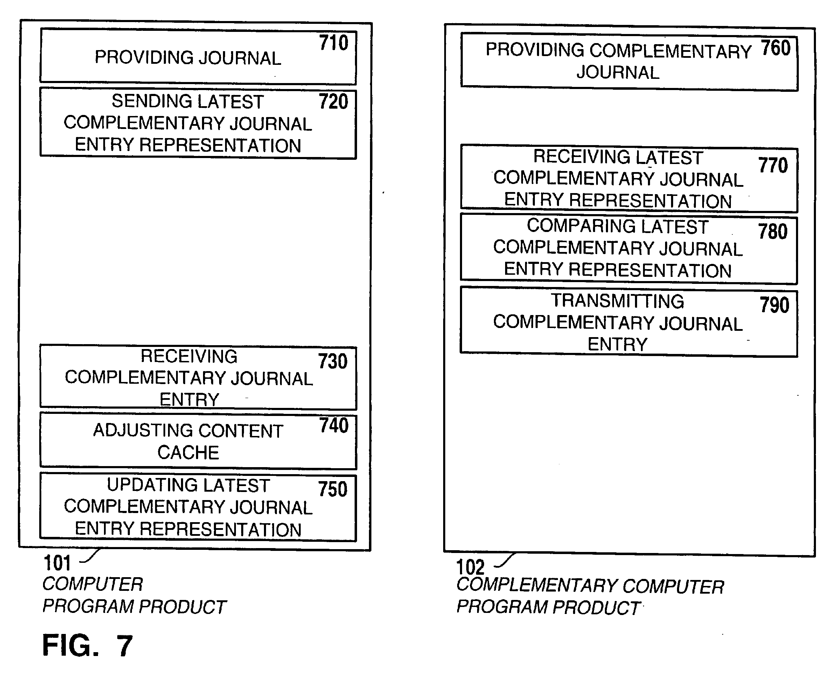

FIG. 7 illustrates preferred embodiments of two computer program products 101, 102 for cache adjustment according to the present invention. Computer program products 101 and 102 complement each other when running on two cache computers 901, 902 with similar functionality. For example, computer program 101 is running on cache computer 901 and complementary computer program 102 is running on complementary cache computer 902. Preferably, in computer system 999 (cf. FIG. 6) each cache computer 900, 901, 902, 905 and 906 runs a first computer program that is functionally equivalent to CPP 101 and a second computer program that is functionally equivalent to CPP 102. This allows each cache computer to act as sender and as receiver according to the invention.

The arrangement of pluralities 710-790 of instructions (also referred to as "coding sections" in the following) of computer program products 101, 102 indicates the temporal order in which the coding sections are processed, when both programs are communicating. The coding sections at the top are processed first and the ones at the bottom are processed last. Coding sections 710 and 760 can be processed substantially simultaneously. Preferably, but not limiting, the coding sections are processed in the following order: 720, 770, 780, 790,730, 740, 750.

Computer program product 101 has pluralities 710, 720, 730, 740, 750 of instructions (coding sections) for causing processor 911 of cache computer 901 to execute steps for adjusting cache 921-1 of cache computer 901. The functions of coding sections 710 to 750, when executed by processor 911, are now explained.

Coding section 710 provides journal 111.

Coding section 720 sends 420 at least a representation 121-2 of a previous latest journal entry 112-11 of complementary journal 112 of complementary cache computer 902. For example, previous latest journal entry 112-11 refers to origin computer 903;

Coding section 730 receives in journal 111 at least one journal entry 112-10 from complementary journal 112. The at least one journal entry 112-10 was generated later than previous latest journal entry 112-11 and, in the example, indicates a modification of object 191 on origin computer 903.

Coding section 740 adjusts 450 cache 921-1 according to journal 111. That is, in case a journal entry of journal 111 indicates that an object (e.g. 191*), which is stored in cache 921-1, has become obsolete because it was modified after being loaded into the cache 921-1, cache computer 901 deletes the object from its cache 921-1.

Coding section 750 updates 460 the at least one representation 121-2 on cache computer 901 according to the journal 111. In the example, a representation of latest journal entry 111-10 referring to third computer 903 replaces representation 121-2.

Complementary computer program product 102 has coding sections 760, 770, 780, 790 to execute steps for transmitting complementary journal entries to cache computer 901. The functions of coding sections 760 to 790, when executed by processor 912 of complementary cache computer 902, are now explained.

Coding section 760 provides complementary journal 112. A journal entry 112-10 of complementary journal 112 has a unique key 112-1 and the journal entry 112-10 indicates a modification of an object (191) on origin computer 903.

Coding section 770 receives at least a representation 121-2 of a previous latest journal entry 112-11 of complementary journal 112. In the example, previous latest journal entry 112-11 refers to origin computer 903.

Coding section 780 compares 430 the at least one representation 121-2 with a comparable portion 112-1 of complementary journal 112.

Coding section 790 transmits 440 from complementary journal 112 to journal 111 of cache computer 901 at least each journal entry 112-10 that refers to the origin computer 903 and that is newer than previous latest journal entry 112-11.

Computer program product 101 comprises further instructions for:
- providing digest matrix 141 on cache computer 901;
- receiving 413 request 190-1 for further object 190 on cache computer 901;
- for identifying 416 via digest matrix 141 complementary cache computer 902 as supplier of further object 190;
- sending request 190-1 for further object 190 from cache computer 901 to complementary cache computer 902;
- receiving further object 190 from complementary cache 922-1 of complementary cache computer 902;
- for storing copy 190* of further object 190 in cache 921-1;
- for updating digest matrix 141 on cache computer 901 according to cache 921-1; and
- sending digest matrix 141 to complementary cache computer 902.

Complementary computer program product 102 comprises further instructions for:
- providing complementary digest matrix 142 on complementary cache computer 902;
- receiving request 190-1 for further object 190 that is stored in complementary cache 922-2 of complementary cache computer 902;
- transmitting further object 190 from complementary cache 922-2 to cache 921-1 of cache computer 901;
- receiving digest matrix 141 of cache computer 901; and
- synchronizing complementary digest matrix 142 with digest matrix 141.

The present invention was already described as computer system 999 in FIGS. 2, 3 and 6. For convenience of explanation, the description of computer system 999 is summarized in the following.

Computer system 999 comprises at least origin computer 903, first cache computer 901 and at least second cache computer 902.

Origin computer 903 is for storing and modifying objects.

First cache computer 901 is for:
- providing first journal 111;
- sending 420 to second cache computer (902) at least representation 121-2 of previous latest journal entry 112-11 of second journal 112 of second cache computer 902, wherein previous latest journal entry 112-11 refers to origin computer 903;
- receiving in first journal 111 at least one journal entry (112-10) from second journal 112 of second cache computer 902;
- adjusting 450 first cache 921-1 of first cache computer 901 according to first journal 111; and
- updating 460 the at least one representation 121-2 on first cache computer 901 according to journal 111.

Second cache computer 902 is for:
- providing second journal 112, wherein journal entry 112-10 of second journal 112 has a unique key (112-1) and journal entry 112-10 indicates a modification of an object on origin computer 903;
- receiving the at least one representation 121-2;
- comparing the at least one representation 121-2 with comparable portion 112-1 of journal 112; and
- transmitting 440 from second journal 112 to first journal 111 at least each journal entry 112-10 that refers to origin computer 903 and that is newer than previous latest journal entry 112-11.

First cache computer 901 further is for:
- providing first digest matrix 141;
- receiving 413 request 190-1 for further object 190;
- identifying 416 via first digest matrix 141 second cache computer 902 as supplier of further object 190;
- sending request 190-1 to second cache computer 902;
- receiving further object 190;
- storing copy 190* of further object 190 in first cache 921-1;
- updating first digest matrix 141; and
- sending first digest matrix 141 to second cache computer 902.

Second cache computer 902 further is for:
- providing second digest matrix 142;
- receiving request 190-1 for further object 190 that is stored in second cache 922-1 of second cache computer 902;
- transmitting further object 190 to first cache 921-1;
- receiving first digest matrix 141 from first cache computer 901 and
- synchronizing 465 first digest matrix 141 with second digest matrix 142.

| **Reference** | **Description** |
|---|---|
| 100/101/102 | Computer program products |
| 111, 112 | Journals |
| 111-1, 112-1 | Journal columns with journal key |
| 111-2, 112-2 | Journal columns with object |
| 111-10, 112-10, 112-11 | Journal entries |
| 121 | S-vector |
| 121-2 | S-mark (S-vector component) |
| 141, 142 | Digest Matrices |
| 141-1, 142-1 | Digest matrice columns for C-computer IDs |
| 141-2, 142-2 | Digest matrice columns for content digests |
| 141-12, 141-22 | Content digests |
| 160 | Comparator |
| 170 | Transformer |
| 190-193, 190*, 191* | Objects |
| 190-1 | Object request |
| 190-2 | Object representation |
| 400 | Method |
| 4xx | Method steps |
| 7xx | Pluralities of instructions |
| 999 | Computer system |
| 900-909 | Computers |
| 910, 911, 912 | Processors |
| 920, 921, 922 | Memories |
| 921-1, 922-1 | Caches |
| 930 | Bus |
| 940 | Input device |
| 950 | Output device |
| 951 | Cursor |
| 960 | User interface |
| 970 | Program carrier (computer readable device) |
| 980 | Program signal |
| 990 | Computer network |
| 990-1 to 990-9 | Computer network branches |

## Claims

1. A computer-implemented method (400) involving a first cache computer (901) having a first cache (921-1) and at least a second cache computer (902) having a second cache (922-1); the method (400) comprising the following steps:
providing (410) a first journal (111) on the first cache computer (901) and a second journal (112) on the second cache computer (902), a first digest matrix (141) of the first computer (901) and a second digest matrix (142) of the second computer (902), wherein both of the digest matrices (141, 142) comprise for each cache computer in the network an identifier of the cache computer and a content digest of the cache computer, wherein the content digest is a sequence of a plurality of bit patterns on the cache computer, wherein each bit pattern is a representation of an object that is stored in the cache of the cache computer and wherein at least one second journal entry (112-10) indicates a previous modification of an object (191) on an origin computer (903);
receiving (413) a request (190-1) for an object (190) stored in the second cache (922-1) on the first cache computer (901);
identifying (416) via the first digest matrix (141) the second computer (902) as a supplier of the object (190);
sending (420) from the first cache computer (901) to the second cache computer (902) a synchronization vector (121), the synchronization vector (121) comprising at least one synchronization mark (121-2), which stores a representation of a previous latest second journal entry (112-11) at the time of the latest synchronization between the first cache computer (901) and the second cache computer (902), wherein the previous latest journal entry (112-11) refers to the origin computer (903) and sending the request (190-1) for the object (190) from the first cache computer (901) to the second cache computer (902);
comparing (430) the at least one synchronization mark (121-2) with a comparable portion (112-1) of the second journal (112), wherein the comparable portion identifies at least a key of the at least one second journal entry (112-10);
if the second journal (112) has a current latest second journal entry (112-10) referring to the origin computer (903) that is newer than the previous latest second journal entry (112-11), transmitting (440) from the second journal (112) to the first journal (111) at least each second journal entry (112-10) that is newer than the previous latest second journal entry (112-11) and that refers to the origin computer (903) and adding said second journal entry (112-10) as a first journal entry (111-10) to the first journal (111), wherein the second computer (902) uses the second cache (922-1) and the transmitting step (440) further transmits the object (190) from the second cache (922-1) to the first cache (921-1) of the first computer (901);
adjusting (450) the first cache (921-1) according to the first journal (111) by deleting an obsolete object (191*) in the first cache (921-1), wherein the obsolete object (191*) is identified by the first journal entry (111-10); and
updating (460) the at least one synchronization mark (121-2) on the first cache computer (901) with a representation of the corresponding latest first journal entry (111-10), which is a copy of the current latest second journal entry (112-10).

2. The method (400) of claim 1, wherein the updating step (460) further updates the first digest matrix (141).

3. The method (400) of claim 2, comprising the further step:
synchronizing (465) the first digest matrix (141) with the second digest matrix (142).

4. A computer program product (101) having pluralities of instructions for causing a processor (911) of a first cache computer (901) to execute steps for adjusting a first cache (921-1) of the first cache computer (901); the computer program product (101) comprising the following pluralities of instructions:
a plurality (710) for providing a first journal (111) and a digest matrix (141) on the first cache computer (901), wherein the digest matrix (141) comprises for each cache computer in the network an identifier of the cache computer and a content digest of the cache computer, wherein the content digest is a sequence of a plurality of bit patterns on the cache computer, wherein each bit pattern is a representation of an object that is stored in the cache of the cache computer;
a plurality for receiving (413) a request (190-1) for an object (190) on the first cache computer (901) and for identifying (416) via the digest matrix (141) a second cache computer (902) as a supplier of the object (190);
a plurality (720) for sending (420) a synchronization vector (121), the synchronization vector (121) comprising at least one synchronization mark (121-2), which stores a representation of a previous latest journal entry (112-11) of a complementary journal (112) of a second cache computer (902), the complementary journal hereinafter referred to as the second journal (112), at the time of the latest synchronization between the first cache computer (901) and the second cache computer (902), wherein the previous latest second journal entry (112-11) refers to an origin computer (903) and for sending the request (190-1) for the object (190) from the first cache computer (901) to the second cache computer (902);
a plurality (730) for receiving in the first journal (111) at least one second journal entry (112-10) from the second journal (112), wherein the at least one second journal entry (112-10) was generated later than the previous latest second journal entry (112-11) and indicates a modification of an object (191) on the origin computer (903) and wherein the at least one second journal entry (112-10) is added as a first journal entry (111-10);
a plurality (740) for adjusting (450) the first cache (921-1) according to the first journal (111) by deleting an obsolete object (191*) in the first cache (921-1), wherein the obsolete object (191*) is identified by the first journal entry (111-10);
a plurality (750) for updating (460) the at least one synchronization mark (121-2) on the first cache computer (901) with a representation of the corresponding latest first journal entry (111-10), which is a copy of the current latest second journal entry (112-10) .

5. A computer program product (102) having pluralities of instructions for causing a processor (912) of a second cache computer (902) having a second cache (922-1) to execute steps for transmitting journal entries to a first cache computer (901) having a first cache (921-1); the computer program product (102) comprising the following pluralities of instructions:
a plurality (760) for providing a journal (112) of the second cache computer, the journal hereinafter referred to as the second journal (112), wherein a journal entry (112-10) of the second journal (112) has a unique key (112-1) and the journal entry (112-10) indicates a modification of an object (191) on an origin computer (903) and a digest matrix (142) on the second cache computer (902), wherein the digest matrix (142) comprises for each cache computer in the network an identifier of the cache computer and a content digest of the cache computer, wherein the content digest is a sequence of a plurality of bit patterns on the cache computer, wherein each bit pattern is a representation of an object that is stored in the cache of the cache computer;
a plurality (770) for receiving a synchronization vector comprising at least one synchronization mark (121-2) which stores a representation of a previous latest second journal entry (112-11) at the time of the latest synchronization between the first cache computer and the second cache computer, wherein the previous latest second journal entry (112-11) refers to the origin computer (903);
a plurality (780) for comparing (430) the at least one synchronization mark (121-2) with a comparable portion (112-1) of the second journal (112), wherein the comparable portion identifies at least a key of the at least one second journal entry (112-10);
a plurality (790) for transmitting (440) from the second journal (112) to a complementary journal (111) of the first cache computer (901), the complementary journal hereinafter referred to as the first journal (111), at least each second journal entry (112-10) that refers to the origin computer (903) and that is newer than the previous latest second journal entry (112-11); and
a plurality for receiving a request (190-1) for an object (190) that is stored in the second cache (922-2) of the second cache computer (902) and for transmitting the further object (190) from the second cache (922-2) to the first cache (921-1) of the first computer (901).

6. The computer program product (101) of claim 4, further comprising instructions for receiving the further object (190) from the second cache (922-1) of the second cache computer (902).

7. The computer program product (101) of claim 6, further comprising instruction for storing a copy (190*) of the further object (190) in the first cache (921-1) of the first cache computer (901).

8. The computer program product (101) of claim 7, further comprising instructions for updating the digest matrix (141) according to the first cache (921-1) of the first cache computer (901).

9. The computer program product (101) of claim 8, comprising further instructions for sending the digest matrix (141) to the second cache computer (902).

10. The computer program product (102) of claim 5, further comprising instructions for receiving a complementary digest matrix (141) of the first cache computer (901) and for synchronizing the digest matrix (142) with the complementary digest matrix (141).

11. A computer system (999) comprising at least an origin computer (903), a first cache computer (901) and at least a second cache computer (902);
the origin computer (903) for storing and modifying objects;
the first cache computer (901) being operable to:
provide a first journal (111) and a first digest matrix (141), wherein the first digest matrix (141) comprises for each cache computer in the network an identifier of the cache computer and a content digest of the the cache computer, wherein the content digest is a sequence of a plurality of bit patterns on the cache computer, wherein each bit pattern is a representation of an object that is stored in the cache of the cache computer;
receive (413) a request (190-1) for an object (190) and identify (416) via the first digest matrix (141) the second cache computer (902) as a supplier of the object (190);
send (420) to the second cache computer (902) a synchronization vector (121), the synchronization vector (121) comprising at least one synchronization mark (121-2) which stores a representation of a previous latest journal entry (112-11) of a journal (112) of the second cache computer, the journal hereinafter referred to as the second journal (112), at the time of the latest synchronization between the first cache computer (901) and the second cache computer (902), wherein the previous latest second journal entry (112-11) refers to the origin computer (903) and send the request (190-1) for the object (190) to the second cache computer (902);
receive in the first journal (111) at least one second journal entry (112-10) from the second journal (112) of the second cache computer (902) that is newer than the previous latest second journal entry (112-10) and that refers to the origin computer (903), wherein the at least one second journal entry (112-10) is added as a first journal entry (111-10) to the first journal (111);
adjust (450) a first cache (921-1) of the first cache computer (901) according to the first journal (111) by deleting an obsolete object (191*) in the first cache (921-1), wherein the obsolete object (191*) is identified by the first journal entry (111-10); and
update (460) the at least one synchronization mark (121-2) on the first cache computer (901) with a representation of the corresponding latest first journal entry (111-10), which is a copy of the current latest second journal entry (112-10) ;
the second cache computer (902) being operable to:
provide the second journal (112), wherein the journal entry (112-10) of the second journal (112) has a unique key (112-1) and the journal entry (112-10) indicates a modification of an object on the origin computer (903) and a second digest matrix (142), wherein the second digest matrix (142) comprises for each cache computer in the network an identifier of the cache computer and a content digest of the cache computer, wherein the content digest is a sequence of a plurality of bit patterns on the cache computer, wherein each bit pattern is a representation of an object that is stored in the cache of the cache computer
receive the synchronization vector comprising the at least one synchronization mark (121-2);
compare the at least one synchronization mark (121-2) with a comparable portion (112-1) of the second journal (112), wherein the comparable portion identifies at least a key of the at least one second journal entry (112-10);
transmit (440) from the second journal (112) to the first journal (111) at least each second journal entry (112-10) that refers to the origin computer (903) and that is newer than the previous latest journal entry (112-11);
receive a request (190-1) for the object (190) that is stored in the second cache (922-1) of the second cache computer (902); and
transmit the object (190) to the first cache (921-1).

12. The computer system (999) of claim 11, wherein the first cache computer (901) is further operable to:
receive the object (190); storing a copy (190*) of the object (190) in the first cache (921-1);
update the first digest matrix (141); and
send the first digest matrix (141) to the second cache computer (902).

13. The computer system (999) of claim 12, wherein the second cache computer (902) further operable to:
receive a first digest matrix (141) from the first cache computer (901); and
synchronize (465) the first digest matrix (141) with the second digest matrix (142).

## Patentansprüche

1. Computerimplementiertes Verfahren (400), beinhaltend einen ersten Cachecomputer (901) mit einem ersten Cache (921-1) und wenigstens einen zweiten Cachecomputer (902) mit einem zweiten Cache (922-1); wobei das Verfahren (400) die nachfolgenden Schritte umfasst:
Bereitstellen (410) eines ersten Journals (111) auf dem ersten Cachecomputer (901) und eines zweiten Journals (112) auf dem zweiten Cachecomputer (902), einer ersten Zusammenfassungsmatrix (141) des ersten Computers (901) und einer zweiten Zusammenfassungsmatrix (142) des zweiten Computers (902), wobei beide Zusammenfassungsmatrizen (141, 142) für jeden Cachecomputer in dem Netzwerk einen Identifizierer für den Cachecomputer und eine Inhaltszusammenfassung des Cachecomputers umfassen, wobei die Inhaltszusammenfassung eine Abfolge einer Mehrzahl von Bitmustern auf dem Cachecomputer ist, wobei jedes Bitmuster eine Darstellung eines Objektes ist, das in dem Cache des Cachecomputers gespeichert ist, und wobei wenigstens ein zweiter Journaleintrag (112-10) eine vorherige Abänderung eines Objektes (191) auf einem Ausgangscomputer (903) anzeigt;
Empfangen (413) einer Anforderung (190-1) für ein Objekt (190) aus der Speicherung in dem zweiten Cache (922-1) auf dem ersten Cachecomputer (901);
über die erste Zusammenfassungsmatrix (141) erfolgendes Identifizieren des zweiten Computers (902) als Lieferant des Objektes (190);
von dem ersten Cachecomputer (901) an den zweiten Cachecomputer (902) erfolgendes Senden (420) eines Synchronisationsvektors (121), wobei der Synchronisationsvektor (121) wenigstens eine Synchronisationsmarke (121-2) umfasst, die eine Darstellung eines vorherigen letzten zweiten Journaleintrages (112-11) zu der Zeit der letzten Synchronisation zwischen dem ersten Cachecomputer (901) und dem zweiten Cachecomputer (902) speichert, wobei der vorherige letzte Journaleintrag (112-11) Bezug auf den Ausgangscomputer (903) nimmt, und Senden der Anforderung (190-1) für das Objekt (190) von dem ersten Cachecomputer (901) an den zweiten Cachecomputer (902);
Vergleichen (430) der wenigstens einen Synchronisationsmarke (121-2) mit einem vergleichbaren Abschnitt (112-1) des zweiten Journals (112), wobei der vergleichbare Abschnitt wenigstens einen Schlüssel des wenigstens einen zweiten Journaleintrages (112-10) identifiziert;
für den Fall, dass das zweite Journal (112) einen aktuellen letzten zweiten Journaleintrag (112-10) mit Bezugnahme auf den Ausgangscomputer (903), der neuer als der vorherige letzte zweite Journaleintrag (112-11) ist, aufweist, von dem zweiten Journal (112) an das erste Journal (111) erfolgendes Übertragen (440) wenigstens jedes zweiten Journaleintrages (112-10), der neuer als der vorherige letzte zweite Journaleintrag (112-11) ist und der auf den Ausgangscomputer (903) Bezug nimmt, und Hinzufügen des zweiten Journaleintrages (112-10) als erster Journaleintrag (111-10) zu dem ersten Journal (111), wobei der zweite Computer (902) den zweiten Cache (922-1) verwendet und der Schritt des Übertragens (440) des Weiteren das Objekt (190) von dem zweiten Cache (922-1) an den ersten Cache (921-1) des ersten Computers (901) überträgt;
Anpassen (450) des ersten Cache (921-1) entsprechend dem ersten Journal (111) durch Löschen eines veralteten Objektes (191*) in dem ersten Cache (921-1), wobei das veraltete Objekt (191*) durch den ersten Journaleintrag (111-10) identifiziert ist; und
Aktualisieren (460) der wenigstens einen Synchronisationsmarke (121-2) auf dem ersten Cachecomputer (901) mit einer Darstellung des entsprechenden letzten ersten Journaleintrages (111-10), der eine Kopie des aktuellen letzten zweiten Journaleintrages (112-10) ist.

2. Verfahren (400) nach Anspruch 1, wobei der Schritt des Aktualisierens (460) des Weiteren die erste Zusammenfassungsmatrix (141) aktualisiert.

3. Verfahren (400) nach Anspruch 2, des Weiteren umfassend den nachfolgenden weiteren Schritt:
Synchronisieren (465) der ersten Zusammenfassungsmatrix (141) mit der zweiten Zusammenfassungsmatrix (142).

4. Computerprogrammerzeugnis (101) mit Mehrzahlen von Anweisungen zum Veranlassen eines Prozessors (911) eines ersten Cachecomputers (901), Schritte zum Anpassen eines ersten Cache (921-1) des ersten Cachecomputers (901) auszuführen, wobei das Computerprogrammerzeugnis (101) die nachfolgenden Mehrzahlen von Anweisungen umfasst:
eine Mehrzahl (710) zum Bereitstellen eines ersten Journals (111) und einer Zusammenfassungsmatrix (141) auf dem ersten Cachecomputer (901), wobei die Zusammenfassungsmatrix (141) für jeden Cachecomputer in dem Netzwerk einen Identifizierer für den Cachecomputer und eine Inhaltszusammenfassung des Cachecomputers umfasst, wobei die Inhaltszusammenfassung eine Abfolge einer Mehrzahl von Bitmustern auf dem Cachecomputer ist, wobei jedes Bitmuster eine Darstellung eines Objektes ist, das in dem Cache des Cachecomputers gespeichert ist;
eine Mehrzahl zum Empfangen (413) einer Anforderung (190-1) für ein Objekt (190) auf dem ersten Cachecomputer (901) und zum über die Zusammenfassungsmatrix (141) erfolgenden Identifizieren (416) eines zweiten Cachecomputers (902) als Lieferant des Objektes (190);
eine Mehrzahl (720) zum Senden (420) eines Synchronisationsvektors (121), wobei der Synchronisationsvektor (121) wenigstens eine Synchronisationsmarke (121-2) umfasst, die eine Darstellung eines vorherigen letzten Journaleintrages (112-11) eines komplementären Journals (112) eines zweiten Cachecomputers (902) - wobei auf das komplementäre Journal in Folge als das zweite Journal (112) Bezug genommen wird - zu der Zeit der letzten Synchronisation zwischen dem ersten Cachecomputer (901) und dem zweiten Cachecomputer (902) speichert, wobei der vorherige letzte zweite Journaleintrag (112-11) auf einen Ausgangscomputer (903) Bezug nimmt, und zum Senden der Anforderung (190-1) für das Objekt (190) von dem ersten Cachecomputer (901) an den zweiten Cachecomputer (902);
eine Mehrzahl (730) zum in dem ersten Journal (111) erfolgenden Empfangen wenigstens eines zweiten Journaleintrages (112-10) von dem zweiten Journal (112), wobei der wenigstens eine zweite Journaleintrag (112-10) später als der vorherige letzte zweite Journaleintrag (112-11) erzeugt worden ist und eine Abänderung eines Objektes (191) auf dem Ausgangscomputer (903) anzeigt und wobei der wenigstens eine zweite Journaleintrag (112-10) als erster Journaleintrag (111-10) hinzugefügt wird;
eine Mehrzahl (740) zum Anpassen (450) des ersten Cache (921-1) entsprechend dem ersten Journal (111) durch Löschen eines veralteten Objektes (191*) in dem ersten Cache (921-1), wobei das veraltete Objekt (191*) durch den ersten Journaleintrag (111-10) identifiziert ist;
eine Mehrzahl (750) zum Aktualisieren (460) der wenigstens einen Synchronisationsmarke (121-2) auf dem ersten Cachecomputer (901) mit einer Darstellung des entsprechenden letzten ersten Journaleintrages (111-10), der eine Kopie des aktuellen letzten zweiten Journaleintrages (112-10) ist.

5. Computerprogrammerzeugnis (102) mit Mehrzahlen von Anweisungen zum Veranlassen eines Prozessors (912) eines zweiten Cachecomputers (902) mit einem zweiten Cache (922-1), Schritte zum Übertragen von Journaleinträgen an einen ersten Cachecomputer (901) mit einem ersten Cache (921-1) auszuführen; wobei das Computerprogrammerzeugnis (102) die nachfolgenden Mehrzahlen von Anweisungen umfasst:
eine Mehrzahl (760) zum Bereitstellen eines Journals (112) des zweiten Cachecomputers - wobei auf das Journal in Folge als das zweite Journal (112) Bezug genommen wird -, wobei ein Journaleintrag (112-10) des zweiten Journals (112) einen eindeutigen Schlüssel (112-1) aufweist und der Journaleintrag (112-10) eine Abänderung betreffend ein Objekt (191) auf einem Ausgangscomputer (903) und eine Zusammenfassungsmatrix (142) auf dem zweiten Cachecomputer (902) anzeigt, wobei die Zusammenfassungsmatrix (142) für jeden Cachecomputer in dem Netzwerk einen Identifizierer des Cachecomputers und eine Inhaltszusammenfassung des Cachecomputers umfasst, wobei die Inhaltszusammenfassung eine Abfolge einer Mehrzahl von Bitmustern auf dem Cachecomputer ist, wobei jedes Bitmuster eine Darstellung eines Objektes ist, das in dem Cache des Cachecomputers gespeichert ist;
eine Mehrzahl (770) zum Empfangen eines Synchronisationsvektors, der wenigstens eine Synchronisationsmarke (121-2) umfasst, die eine Darstellung eines vorherigen letzten zweiten Journaleintrages (112-11) zu der Zeit der letzten Synchronisation zwischen dem ersten Cachecomputer und dem zweiten Cachecomputer speichert, wobei der vorherige letzte zweite Journaleintrag (121-11) auf den Ausgangscomputer (903) Bezug nimmt;
eine Mehrzahl (780) zum Vergleichen (430) der wenigstens einen Synchronisationsmarke (121-2) mit einem vergleichbaren Abschnitt (112-1) des zweiten Journals (112), wobei der vergleichbare Abschnitt wenigstens einen Schlüssel des wenigstens einen zweiten Journaleintrages (112-10) identifiziert;
eine Mehrzahl (790) zum von dem zweiten Journal (112) an ein komplementäres Journal (111) des ersten Cachecomputers (901) erfolgenden Übertragen - wobei auf das komplementäre Journal in Folge als das erste Journal (111) Bezug genommen wird - wenigstens jedes zweiten Journaleintrages (112-10), der auf den Ausgangscomputer (903) Bezug nimmt und der neuer als der vorherige letzte zweite Journaleintrag (112-11) ist; und
eine Mehrzahl zum Empfangen einer Anforderung (190-1) für ein Objekt (190), das in dem zweiten Cache (922-2) des zweiten Cachecomputers (902) gespeichert ist, und zum Übertragen des weiteren Objektes (190) von dem zweiten Cache (922-2) an den ersten Cache (921-1) des ersten Computers (901).

6. Computerprogrammerzeugnis (101) nach Anspruch 4, des Weiteren umfassend Anweisungen zum Empfangen des weiteren Objektes (190) von dem zweiten Cache (922-1) des zweiten Cachecomputers (902).

7. Computerprogrammerzeugnis (101) nach Anspruch 6, des Weiteren umfassend eine Anweisung zum Speichern einer Kopie (190*) des weiteren Objektes (190) in dem ersten Cache (921-1) des ersten Cachecomputers (901).

8. Computerprogrammerzeugnis (101) nach Anspruch 7, des Weiteren umfassend Anweisungen zum Aktualisieren der Zusammenfassungsmatrix (141) entsprechend dem ersten Cache (921-1) des ersten Cachecomputers (901).

9. Computerprogrammerzeugnis (101) nach Anspruch 8, des Weiteren umfassend Anweisungen zum Senden der Zusammenfassungsmatrix (141) an den zweiten Cachecomputer 902).

10. Computerprogrammerzeugnis (102) nach Anspruch 5, des Weiteren umfassend Anweisungen zum Empfangen einer komplementären Zusammenfassungsmatrix (141) des ersten Cachecomputers (901) und zum Synchronisieren der Zusammenfassungsmatrix (142) mit der komplementären Zusammenfassungsmatrix (141).

11. Computersystem (999), umfassend wenigstens einen Ausgangscomputer (903), einen ersten Cachecomputer (901) und wenigstens einen zweiten Cachecomputer (902);
wobei der Ausgangscomputer (903) dem Speichern und Abändern von Objekten dient;
wobei der erste Cachecomputer (901) betreibbar ist zum:
Bereitstellen eines ersten Journals (111) und einer ersten Zusammenfassungsmatrix (141), wobei die erste Zusammenfassungsmatrix (141) für jeden Cachecomputer in dem Netzwerk einen Identifizierer für den Cachecomputer und eine Zusammenfassungsmatrix des Cachecomputers umfasst, wobei die Inhaltszusammenfassung eine Abfolge einer Mehrzahl von Bitmustern auf dem Cachecomputer ist, wobei jedes Bitmuster eine Darstellung eines Objektes ist, das in dem Cache des Cachecomputers gespeichert ist;
Empfangen (413) einer Anforderung (190-1) für ein Objekt (190) und über die erste Zusammenfassungsmatrix (141) erfolgendes Identifizieren (416) des zweiten Cachecomputers (902) als Lieferant des Objektes (190);
an den zweiten Cachecomputer (902) erfolgendes Senden (420) eines Synchronisationsvektors (121), wobei der Synchronisationsvektor (121) wenigstens eine Synchronisationsmarke (121-2) umfasst, die eine Darstellung eines vorherigen letzten Journaleintrages (112-11) eines Journals (112) des zweiten Cachecomputers - wobei auf das Journal in Folge als das zweite Journal (112) Bezug genommen wird - zu der Zeit der letzten Synchronisation zwischen dem ersten Cachecomputer (901) und dem zweiten Cachecomputer (902) speichert, wobei der vorherige letzte zweite Journaleintrag (112-11) auf den Ausgangscomputer (903) Bezug nimmt, und Senden der Anforderung (190-1) für das Objekt (190) an den zweiten Cachecomputer (902);
in dem ersten Journal (111) erfolgendes Empfangen wenigstens eines zweiten Journaleintrages (112-10) von dem zweiten Journal (112) des zweiten Cachecomputers (902), der neuer als der vorherige letzte zweite Journaleintrag (112-10) ist und der auf den Ausgangscomputer (903) Bezug nimmt, wobei der wenigstens eine zweite Journaleintrag (112-10) als erster Journaleintrag (110-10) zu dem ersten Journal (111) hinzugefügt wird;
Anpassen (450) eines ersten Cache (921-1) des ersten Cachecomputers (901) entsprechend dem ersten Journal (111) durch Löschen eines veralteten Objektes (191*) in dem ersten Cache (921-1), wobei das veraltete Objekt (191*) durch den ersten Journaleintrag (111-10) identifiziert ist; und
Aktualisieren (460) der wenigstens einen Synchronisationsmarke (121-2) auf dem ersten Cachecomputer (901) mit einer Darstellung des entsprechenden letzten ersten Journaleintrages (111-10), der eine Kopie des aktuellen letzten zweiten Journaleintrages (112-10) ist;
wobei der zweite Cachecomputer (902) betreibbar ist zum:
Bereitstellen des zweiten Journals (112), wobei der Journaleintrag (112-10) des zweiten Journals (112) einen eindeutigen Schlüssel (112-1) aufweist und der Journaleintrag (112-10) eine Abänderung betreffend ein Objekt auf dem Ausgangscomputer (903) und eine zweite Zusammenfassungsmatrix (142) anzeigt, wobei die zweite Zusammenfassungsmatrix (142) für jeden Cachecomputer in dem Netzwerk einen Identifizierer für den Cachecomputer und eine Inhaltszusammenfassung des Cachecomputers umfasst, wobei die Inhaltszusammenfassung eine Abfolge einer Mehrzahl von Bitmustern auf dem Cachecomputer ist, wobei jedes Bitmuster eine Darstellung eines Objektes ist, das in dem Cache des Cachecomputers gespeichert ist;
Empfangen des Synchronisationsvektors, der die wenigstens eine Synchronisationsmarke (121-2) umfasst;
Vergleichen der wenigstens einen Synchronisationsmarke (121-2) mit einem vergleichbaren Abschnitt (112-1) des zweiten Journals (112), wobei der vergleichbare Abschnitt wenigstens einen Schlüssel des wenigstens einen zweiten Journaleintrages (112-10) identifiziert;
von dem zweiten Journal (112) an das erste Journal (111) erfolgendes Übertragen (440) wenigstens jedes zweiten Journaleintrages (112-10), der auf den Ausgangscomputer (903) Bezug nimmt und der neuer als der vorherige letzte Journaleintrag (112-11) ist;
Empfangen einer Anforderung (190-1) für das Objekt (190), das in dem zweiten Cache (922-1) des zweiten Cachecomputers (902) gespeichert ist; und Übertragen des Objektes (190) an den ersten Cache (921-1).

12. Computersystem (999) nach Anspruch 11, wobei der erste Cachecomputer (901) des Weiteren betreibbar ist zum:
Empfangen des Objektes (190);
Speichern einer Kopie (190*) des Objektes (190) in dem ersten Cache (921-1);
Aktualisieren der ersten Zusammenfassungsmatrix (141); und
Senden der ersten Zusammenfassungsmatrix (141) an den zweiten Cachecomputer (902).

13. Computersystem (999) nach Anspruch 12, wobei der zweite Cachecomputer (902) des Weiteren betreibbar ist zum:
Empfangen einer ersten Zusammenfassungsmatrix (141) von dem ersten Cachecomputer (901); und
Synchronisieren (465) der ersten Zusammenfassungsmatrix (141) mit der zweiten Zusammenfassungsmatrix (142).

## Revendications

1. Procédé implémenté par ordinateur (400) qui nécessite un premier ordinateur d'antémémoire (901) ayant une première antémémoire (921-1) et au moins un second ordinateur d'antémémoire (902) ayant une seconde antémémoire (922-1) ; le procédé comprenant les étapes suivantes :
la fourniture (410) d'un premier journal (111) sur le premier ordinateur d'antémémoire (901) et d'un second journal (112) sur le second ordinateur d'antémémoire (902), d'une première matrice « digest » (141) du premier ordinateur (901) et d'une seconde matrice « digest » (142) du second ordinateur (902), opération pendant laquelle les deux parmi les matrices «digest» (141, 142) comprennent pour chaque ordinateur d' antémémoire dans le réseau un identificateur de l'ordinateur d'antémémoire et un contenu « digest » de l'ordinateur d'antémémoire, opération pendant laquelle le contenu « digest » est une séquence d'une pluralité de profils binaires sur l'ordinateur d'antémémoire, et pendant laquelle chaque profil binaire est une représentation d'un objet qui est stocké dans l'antémémoire de l'ordinateur d'antémémoire et pendant laquelle au moins une entrée de second journal (112-10) indique une modification préalable d'un objet (191) sur un ordinateur d'origine (903) ;
la réception (413) d'une demande (190-1) pour un objet (190) stocké dans la seconde antémémoire (922-1) sur le premier ordinateur d'antémémoire (901) ;
l'identification (416) du second ordinateur (902) comme un fournisseur de l'objet (190) par l'intermédiaire de la première matrice « digest » (141) ;
l'envoi (420) d'un vecteur de synchronisation (121) depuis le premier ordinateur d'antémémoire (901) vers le second ordinateur d'antémémoire (902), le vecteur de synchronisation (121) comprenant au moins une marque de synchronisation (121-2), qui stocke une représentation d'une dernière entrée de second journal précédente (112-11) au moment de la dernière synchronisation entre le premier ordinateur d'antémémoire (901) et le second ordinateur d'antémémoire (902), opération pendant laquelle la dernière entrée de journal précédente (112-11) se réfère à l'ordinateur d'origine (903), et l'envoi de la demande (190-1) pour l'objet (190) depuis le premier ordinateur d'antémémoire (901) vers le second ordinateur d'antémémoire (902) ;
la comparaison (430) d'au moins une marque de synchronisation (121-2) à une partie comparable (112-1) du second journal (112), opération pendant laquelle la partie comparable (112-1) identifie au moins un code de la au moins une entrée de second journal (112-10) ;
si le second journal (112) a une dernière entrée de second journal courante (112-10) qui se réfère à l'ordinateur d'origine (903) et qui est plus récente que la dernière entrée de second journal précédente (112-11), la transmission (440) depuis le second journal (112) vers le premier journal (111) d'au moins chaque entrée de second journal (112-10) qui est plus récente que la dernière entrée de second journal précédente (112-11) et qui se réfère à l'ordinateur d'origine (903), ainsi que l'addition de ladite entrée de second journal (112-10) comme une entrée de premier journal (111-10) au premier journal (111), opérations pendant lesquelles le second ordinateur (902) utilise la seconde antémémoire (922-1) et pendant lesquelles l'étape de transmission (440) transmet en outre l'objet (190) depuis la seconde antémémoire (922-1) vers la première antémémoire (921-1) du premier ordinateur (901) ;
l'ajustement (450) de la première antémémoire (921-1) conformément au premier journal (111) par l'effacement d'un objet obsolète (191*) dans la première antémémoire (921-1), opération pendant laquelle l'objet obsolète (191*) est identifié par l'entrée de premier journal (111-10) ; et
la mise à jour (460) de la au moins une marque de synchronisation (121-2) sur le premier ordinateur d'antémémoire (901) avec une représentation de la dernière entrée de premier journal correspondante (111-10) qui est une copie de la dernière entrée de second journal courante (112-10).

2. Procédé (400) selon la revendication 1, dans lequel l'étape de mise à jour (460) met à jour la première matrice « digest » (141) en supplément.

3. Procédé (400) selon la revendication 1, comprenant l'étape supplémentaire suivante :
la synchronisation (465) de la première matrice « digest » (141) par rapport à la seconde matrice « digest » (142)

4. Produit de programme informatique (101) ayant des pluralités d'instructions afin de provoquer qu'un processeur (911) d'un premier ordinateur d'antémémoire (901) exécute les étapes pour l'ajustement d'une première antémémoire (921-1) du premier ordinateur d'antémémoire (901) ; le produit de programme informatique (101) comprenant les pluralités suivantes d'instructions :
une pluralité (710) pour la fourniture d'un premier journal (111) et d'une matrice « digest » (141) sur le premier ordinateur d'antémémoire (901), opération pendant laquelle la matrice « digest » (141) comprend pour chaque ordinateur d'antémémoire dans le réseau un identificateur de l'ordinateur d'antémémoire et un contenu « digest » de l'ordinateur d'antémémoire, opération pendant laquelle le contenu « digest » est une séquence d'une pluralité de profils binaires sur l'ordinateur d'antémémoire, et opération pendant laquelle chaque profil binaire est une représentation d'un objet qui est stocké dans l'antémémoire de l'ordinateur d'antémémoire ;
une pluralité (423) pour la réception d'une demande (190-1) pour un objet (190) sur le premier ordinateur d'antémémoire (901) et pour l'identification (416) d'un second ordinateur (902) comme un fournisseur de l'objet (190) par l'intermédiaire de la première matrice « digest » (141) ;
une pluralité (720) pour l'envoi (420) d'un vecteur de synchronisation (121), le vecteur de synchronisation (121) comprenant au moins une marque de synchronisation (121-2), qui stocke une représentation d'une dernière entrée de journal précédente (112-11) d'un journal complémentaire (112) d'un second ordinateur d'antémémoire (902), tout en se référant au journal complémentaire ci-après comme le second journal (112), au moment de la dernière synchronisation entre le premier ordinateur d'antémémoire (901) et le second ordinateur d'antémémoire (902), opération pendant laquelle la dernière entrée de second journal précédente (112-11) se réfère à un ordinateur d'origine (903), et pour l'envoi de la demande (190-1) pour l'objet (190) depuis le premier ordinateur d'antémémoire (901) vers le second ordinateur d'antémémoire (902) ;
une pluralité (730) pour la réception dans le premier journal (111) d'au moins une entrée de second journal (112-10) depuis le second journal (112), opération pendant laquelle la au moins une entrée de second journal (112-10) a été générée plus tard que la dernière entrée de journal précédente (112-11) et indique une modification d'un objet (191) sur l'ordinateur d'origine (903) et pendant laquelle la au moins une entrée de second journal (112-10) est additionnée comme une entrée de premier journal (111-10) ;
une pluralité (740) pour l'ajustement (450) de la première antémémoire (921-1) conformément au premier journal (111) par l'effacement d'un objet obsolète (191*) dans la première antémémoire (921-1), opération pendant laquelle l'objet obsolète (191*) est identifié par l'entrée de premier journal (111-10) ; et
une pluralité (750) pour la mise à jour (460) de la au moins une marque de synchronisation (121-2) sur le premier ordinateur d'antémémoire (901) avec une représentation de la dernière entrée de premier journal correspondante (111-10) qui est une copie de la dernière entrée de second journal courante (112-10).

5. Produit de programme informatique (102) ayant des pluralités d'instructions afin de provoquer qu'un processeur (912) d'un second ordinateur d'antémémoire (902) ayant une seconde antémémoire (922-1) exécute les étapes pour la transmission des entrées de journal vers un premier ordinateur d'antémémoire (901) ayant une première antémémoire (921-1) ; le produit de programme informatique (101) comprenant les pluralités suivantes d'instructions :
une pluralité (760) pour la fourniture d'un journal (112) du second ordinateur d'antémémoire, tout en se référant au journal ci-après comme le second journal (112), opération pendant laquelle une entrée de journal (112-10) du second journal (112) a un code unique (112-1) et pendant laquelle l'entrée de journal (112-10) indique une modification d'un objet (191) sur un ordinateur d'origine (903) et d'une matrice « digest » (142) sur le second ordinateur d'antémémoire (902), opération pendant laquelle la matrice « digest » (142) comprend pour chaque ordinateur d'antémémoire dans le réseau un identificateur de l'ordinateur d'antémémoire et un contenu « digest » de l'ordinateur d'antémémoire, et pendant laquelle le contenu « digest » est une séquence d'une pluralité de profils binaires sur l'ordinateur d'antémémoire, et pendant laquelle chaque profil binaire est une représentation d'un objet qui est stocké dans l'antémémoire de l'ordinateur d'antémémoire ;
une pluralité (770) pour la réception d'un vecteur de synchronisation comprenant au moins une marque de synchronisation (121-2) qui stocke une représentation d'une dernière entrée de second journal précédente (112-11) au moment de la dernière synchronisation entre le premier ordinateur d'antémémoire et le second ordinateur d'antémémoire, opération pendant laquelle la dernière entrée de second journal précédente (112-11) se réfère à l'ordinateur d'origine (903) ;
une pluralité (780) pour la comparaison (430) de la au moins une marque de synchronisation (121-2) à une partie comparable (112-1) du second journal (112), opération pendant laquelle la partie comparable (112-1) identifie au moins un code de la au moins une entrée de second journal (112-10) ;
une pluralité (790) pour la transmission (440) depuis le second journal (112) vers un journal complémentaire (111) du premier ordinateur d'antémémoire (901), tout en se référant au journal complémentaire ci-après comme le premier journal (111), au moins chaque entrée de second journal (112-10) qui se réfère à l'ordinateur d'origine (903) et qui est plus récente que la dernière entrée de second journal précédente (112-11) ; et
une pluralité pour la réception d'une demande (190-1) pour un objet (190) qui est stocké dans la seconde antémémoire (922-2) du second ordinateur d'antémémoire (902) et pour la transmission de l'objet supplémentaire (190) depuis la seconde antémémoire (922-2) vers la première antémémoire (921-1) du premier ordinateur (901).

6. Produit de programme informatique (101) selon la revendication 4, comprenant en outre des instructions pour la réception de l'objet supplémentaire (190) depuis la seconde antémémoire (922-1) du second ordinateur d'antémémoire (902).

7. Produit de programme informatique (101) selon la revendication 6, comprenant en outre une instruction pour le stockage d'une copie (190*) de l'objet supplémentaire (190) dans la première antémémoire (921-1) du premier ordinateur d'antémémoire (901).

8. Produit de programme informatique (101) selon la revendication 7, comprenant en outre des instructions pour la mise à jour de la matrice « digest » (141) conformément à la première antémémoire (921-1) du premier ordinateur d'antémémoire (901).

9. Produit de programme informatique (101) selon la revendication 8, comprenant en outre des instructions pour l'envoi de la matrice « digest » (141) vers le second ordinateur d'antémémoire (902).

10. Produit de programme informatique (102) selon la revendication 5, comprenant en outre des instructions pour la réception d'une matrice « digest » complémentaire (141) du premier ordinateur d'antémémoire (901) et pour la synchronisation de la matrice « digest » (142) avec la matrice « digest » complémentaire (141).

11. Système informatique (999) comprenant au moins un ordinateur d'origine (903), un premier ordinateur d'antémémoire (901) et au moins un second ordinateur d'antémémoire (902) ;
l'ordinateur d'origine (903) étant prévu pour le stockage et la modification des objets ;
le premier ordinateur d'antémémoire (901) pouvant fonctionner pour :
la fourniture d'un premier journal (111) et d'une première matrice « digest » (141), opération pendant laquelle la première matrice « digest » (141) comprend pour chaque ordinateur d'antémémoire dans le réseau un identificateur de l'ordinateur d'antémémoire et un contenu « digest » de l'ordinateur d'antémémoire, opération pendant laquelle le contenu « digest » est une séquence d'une pluralité de profils binaires sur l'ordinateur d'antémémoire, et pendant laquelle chaque profil binaire est une représentation d'un objet qui est stocké dans l'antémémoire de l'ordinateur d'antémémoire ;
la réception (413) d'une demande (190-1) pour un objet (190) et l'identification (416) du second ordinateur (902) comme un fournisseur de l'objet (190) par l'intermédiaire de la première matrice « digest » (141) ;
l'envoi (420) d'un vecteur de synchronisation (121) vers le second ordinateur d'antémémoire (902), le vecteur de synchronisation (121) comprenant au moins une marque de synchronisation (121-2) qui stocke une représentation d'une dernière entrée de journal précédente (112-11) d'un journal (112) du second ordinateur d'antémémoire, tout en se référant au journal ci-après comme le second journal (112), au moment de la dernière synchronisation entre le premier ordinateur d'antémémoire (901) et le second ordinateur d'antémémoire (902), opération pendant laquelle la dernière entrée de second journal précédente (112-11) se réfère à l'ordinateur d'origine (903), et l'envoi de la demande (190-1) pour l'objet (190) vers le second ordinateur d'antémémoire (902) ;
la réception dans le premier journal (111) d'au moins une entrée de second journal (112-10) depuis le second journal (112) du second ordinateur d'antémémoire (902), qui est plus récente que la dernière entrée de second journal précédente (112-10) et qui se réfère à l'ordinateur d'origine (903), opération pendant laquelle la au moins une entrée de second journal (112-10) est additionnée comme une entrée de premier journal (111-10) au premier journal (111) ;
l'ajustement (450) d'une première antémémoire (921-1) du premier ordinateur d'antémémoire (901) conformément au premier journal (111) par l'effacement d'un objet obsolète (191*) dans la première antémémoire (921-1), opération pendant laquelle l'objet obsolète (191*) est identifié par l'entrée de premier journal (111-10) ; et
la mise à jour (460) de la au moins une marque de synchronisation (121-2) sur le premier ordinateur d'antémémoire (901) avec une représentation de la dernière entrée de premier journal correspondante (111-10) qui est une copie de la dernière entrée de second journal courante (112-10) ;
le second ordinateur d'antémémoire (902) pouvant fonctionner pour :
la fourniture du second journal (112), opération pendant laquelle l'entrée de journal (112-10) du second journal (112) a un code unique (112-1) et pendant laquelle l'entrée de journal (112-10) indique une modification d'un objet sur l'ordinateur d'origine (903) et d'une seconde matrice « digest » (142), pendant laquelle la seconde matrice « digest » (142) comprend pour chaque ordinateur d'antémémoire dans le réseau un identificateur de l'ordinateur d'antémémoire et un contenu « digest » de l'ordinateur d'antémémoire, pendant laquelle le contenu « digest » est une séquence d'une pluralité de profils binaires sur l'ordinateur d'antémémoire, et pendant laquelle chaque profil binaire est une représentation d'un objet qui est stocké dans l'antémémoire de l'ordinateur d'antémémoire ;
la réception du vecteur de synchronisation comprenant la au moins une marque de synchronisation (121-2) ;
la comparaison de la au moins une marque de synchronisation (121-2) à une partie comparable (112-1) du second journal (112), opération pendant laquelle la partie comparable identifie au moins un code de la au moins une entrée de second journal (112-10) ;
la transmission (440) depuis le second journal (112) vers le premier journal (111) d'au moins chaque entrée de second journal (112-10) qui se réfère à l'ordinateur d'origine (903) et qui est plus récente que la dernière entrée de second journal précédente (112-11) ;
la réception d'une demande (190-1) pour un objet (190) qui est stocké dans la seconde antémémoire (922-1) du second ordinateur d'antémémoire (902) ; et
la transmission de l'objet (190) vers la première antémémoire (921-1).

12. Système informatique (999) selon la revendication 11, dans lequel le premier ordinateur d'antémémoire (901) peut fonctionner en outre pour :
la réception de l'objet (190) ; le stockage d'une copie (190*) de l'objet (190) dans la première antémémoire (921-1) ;
la mise à jour de la première matrice « digest » (141) ; et
l'envoi de la première matrice « digest » (141) vers le second ordinateur d'antémémoire (902).

13. Système informatique (999) selon la revendication 12, dans lequel le second ordinateur d'antémémoire (902) peut fonctionner en outre pour :
la réception d'une première matrice « digest » (141) depuis le premier ordinateur d'antémémoire (901) ; et
la synchronisation (465) de la première matrice « digest » (141) avec la seconde matrice « digest » (142).
